# EUROPEAN PATENT APPLICATION

(11) **EP 4 848 687 A1**
(43) Date of publication of application: **02.12.2026**
(21) Application number: 25858774.0
(22) Date of filing: 15.07.2025
(51) Int. Cl.: H04L 49/10

(54) **DATA TRANSMISSION METHODS AND APPARATUSES, AND ELECTRONIC DEVICE, COMPUTER-READABLE STORAGE MEDIUM AND COMPUTER PROGRAM PRODUCT**

(30) Priority: 29.08.2024 CN 202411201394
(71) Applicant: Tencent Technology (Shenzhen) Company Limited, Shenzhen, Guangdong 518057 (CN)
(72) Inventor: SHAN, Guozhi, Shenzhen, Guangdong 518057 (CN); JI, Xuefeng, Shenzhen, Guangdong 518057 (CN); WANG, Jinzhu, Shenzhen, Guangdong 518057 (CN); CHEN, Jie, Shenzhen, Guangdong 518057 (CN)
(74) Representative: Gunzelmann, Rainer
(86) International application number: PCT/CN2025/108616
(87) International publication number: WO 2026/045730

(57) **Abstract**

Provided in the present application are data transmission methods and apparatuses, and an electronic device, a storage medium and a program product. A method is applied to a multi-layer network architecture, wherein the multi-layer network architecture comprises an access layer and an aggregation layer, the access layer comprises a plurality of access switches, each access switch is connected to at least one first computing device, and each first computing device is provided with at least one network interface card. The method comprises: for any network interface card in a first computing device, acquiring a routing path for transmitting data to the network interface card; and sending the routing path to a second access switch in an access layer, wherein the second access switch is connected to at least one second computing device, and the second access switch is used for forwarding to the network interface card, on the basis of the routing path, data of a network interface card corresponding to a destination address, which data is sent by the second computing device.

## Description

### RELATED APPLICATION

This application is based on and claims priority to Chinese Patent Application 202411201394.7, filed on August 29, 2024, which is incorporated herein by reference in its entirety.

### FIELD OF THE TECHNOLOGY

The present disclosure relates to the field of data processing technologies, and in particular, to a data transmission method and apparatus, an electronic device, a computer-readable storage medium, and a computer program product.

### BACKGROUND OF THE DISCLOSURE

With the development of science and technology, users have an increasing demand for computing devices. In the related art, in a case that a first computing device and a second computing device need to perform data transmission, the first computing device may randomly transmit a data transmission request to a switch, so that the switch may transmit the data transmission request to the second computing device. To be specific, a routing path is formed by a path between the first computing device and a randomly determined switch and a path between the randomly determined switch and the second computing device, which means that the routing path is randomly determined. The randomly determined routing path may lead to load imbalance of the switch, resulting in a relatively low data transmission rate between the computing devices, that is, relatively low data transmission efficiency between the computing devices.

### SUMMARY

Embodiments of the present disclosure provide a data transmission method and apparatus, an electronic device, a storage medium, and a program product, which can improve data transmission efficiency.

Technical solutions provided in the embodiments of the present disclosure are implemented as follows.

An embodiment of the present disclosure provides a data transmission method, which is applied to a multilayer network architecture, the multilayer network architecture including an access layer and an aggregation layer, the access layer including a plurality of access switches, each access switch being connected to at least one first computing device, each first computing device being provided with at least one network interface card, and the method including
obtaining, for any network interface card in the first computing device, a routing path configured for transmitting data to the network interface card, the routing path including the access layer and the aggregation layer; and
transmitting the routing path to a second access switch in the access layer, the second access switch being connected to at least one second computing device; and
the second access switch being configured to forward, to the network interface card based on the routing path, data with a destination address corresponding to the network interface card and transmitted by the second computing device.

An embodiment of the present disclosure provides a data transmission method, which is applied to a multilayer network architecture, the multilayer network architecture including an access layer and an aggregation layer, the aggregation layer including at least one aggregation sublayer, the access layer including a plurality of access switches, each access switch being connected to at least one first computing device, each first computing device being provided with at least one network interface card, the aggregation sublayer including a plurality of aggregation switches, and the method including:
receiving, by a second access switch in the access layer, a routing path configured for transmitting data to a network interface card in the first computing device, a one-to-one correspondence existing between the routing path and the network interface card; and
the second access switch being connected to at least one second computing device, and the second access switch and the first access switch belonging to different blocks; and
transmitting, after data with a destination address corresponding to the network interface card and transmitted by the second computing device is received, the data to the network interface card based on the routing path.

An embodiment of the present disclosure provides a data transmission apparatus, which is applied to a multilayer network architecture, the multilayer network architecture including an access layer and an aggregation layer, the aggregation layer including at least one aggregation sublayer, the access layer including a plurality of access switches, each access switch being connected to at least one first computing device, each first computing device being provided with at least one network interface card, the aggregation sublayer including a plurality of aggregation switches, and the apparatus including:
an obtaining module, configured to obtain, for any network interface card in the first computing device, a routing path configured for transmitting data to the network interface card, a one-to-one correspondence existing between the routing path and the network interface card;
a first transmission module, configured to transmit the routing path to a second access switch in the access layer, the second access switch being connected to at least one second computing device, and the second access switch and the first access switch belonging to different blocks; and
the second access switch being configured to forward, to the network interface card based on the routing path, data with a destination address corresponding to the network interface card and transmitted by the second computing device.

An embodiment of the present disclosure provides a data transmission apparatus, which is applied to a multilayer network architecture, the multilayer network architecture including an access layer and an aggregation layer, the aggregation layer including at least one aggregation sublayer, the access layer including a plurality of access switches, each access switch being connected to at least one first computing device, each first computing device being provided with at least one network interface card, the aggregation sublayer including a plurality of aggregation switches, and the apparatus including:
a receiving module, configured to receive a routing path configured for transmitting data to a network interface card in the first computing device, a one-to-one correspondence existing between the routing path and the network interface card; and
the second access switch being connected to at least one second computing device, and the second access switch and the first access switch belonging to different blocks; and
a second transmission module, configured to transmit, after receiving data with a destination address corresponding to the network interface card and transmitted by the second computing device, the data to the network interface card based on the routing path.

An embodiment of the present disclosure provides an electronic device, including:
a memory, configured to store a computer-executable instruction or a computer program; and
a processor, configured to implement the data transmission method provided in the embodiments of the present disclosure when executing the computer-executable instruction or the computer program stored in the memory.

An embodiment of the present disclosure provides a computer-readable storage medium, having a computer program or computer-executable instructions stored therein, the computer program or the computer-executable instruction, when executed by a processor, implementing the data transmission method provided in the embodiments of the present disclosure.

An embodiment of the present disclosure provides a computer program product, including a computer program or a computer-executable instruction, the computer program or the computer-executable instruction, when executed by a processor, implementing the data transmission method provided in the embodiments of the present disclosure.

The embodiments of the present disclosure have following beneficial effects:

In the data transmission method provided in the embodiments of the present disclosure, for any network interface card in the first computing device, a routing path configured for transmitting data to the network interface card may be obtained, the routing path passing through the access layer and the aggregation layer; and the routing path is transmitted to the second access switch in the access layer, the second access switch being connected to at least one second computing device, and the second access switch being configured to forward, to the network interface card based on the routing path, the data with a destination address corresponding to the network interface card and transmitted by the second computing device.

In other words, in the data transmission method provided in the embodiments of the present disclosure, any network interface card of the first computing device corresponds to a routing path, and the second computing device may transmit data to any network interface card of the first computing device based on the routing path. Compared with randomly determining a routing path for data transmission, utilizing a routing path corresponding to a network interface card for data transmission can implement load balance for a switch that performs data transmission between the first computing device and the second computing device, and save time and resources for randomly determining a routing path, thereby improving a data transmission rate and improving resource utilization. In other words, the data transmission method provided in the embodiments of the present disclosure can improve data transmission efficiency and resource utilization during data transmission.

### BRIEF DESCRIPTION OF THE DRAWINGS

FIG. 1A is a schematic structural diagram of a data transmission system according to an embodiment of the present disclosure.
FIG. 1B is a first schematic structural diagram of a multilayer network architecture according to an embodiment of the present disclosure.
FIG. 2A is a schematic structural diagram of a first electronic device according to an embodiment of the present disclosure.
FIG. 2B is a schematic structural diagram of a second electronic device according to an embodiment of the present disclosure.
FIG. 3A is a second schematic structural diagram of the multilayer network architecture according to an embodiment of the present disclosure.
FIG. 3B is a third schematic structural diagram of the multilayer network architecture according to an embodiment of the present disclosure.
FIG. 4 is a schematic diagram of a data transmission method according to an embodiment of the present disclosure.
FIG. 5 is a first schematic flowchart of the data transmission method according to an embodiment of the present disclosure.
FIG. 6 is a second schematic flowchart of the data transmission method according to an embodiment of the present disclosure.
FIG. 7 is a first schematic diagram of a routing path according to an embodiment of the present disclosure.
FIG. 8 is a second schematic diagram of the routing path according to an embodiment of the present disclosure.
FIG. 9 is a third schematic flowchart of the data transmission method according to an embodiment of the present disclosure.
FIG. 10 is a fourth schematic flowchart of the data transmission method according to an embodiment of the present disclosure.
FIG. 11 is a fifth schematic flowchart of the data transmission method according to an embodiment of the present disclosure.
FIG. 12 is a third schematic diagram of the routing path according to an embodiment of the present disclosure.
FIG. 13 is a sixth schematic flowchart of the data transmission method according to an embodiment of the present disclosure.
FIG. 14 is a fourth schematic diagram of the routing path according to an embodiment of the present disclosure.
FIG. 15 is a schematic diagram of a connection relationship between a computing device and an access switch according to an embodiment of the present disclosure.
FIG. 16 is a seventh schematic flowchart of the data transmission method according to an embodiment of the present disclosure.
FIG. 17 is a fifth schematic diagram of the routing path according to an embodiment of the present disclosure.
FIG. 18 is an eighth schematic flowchart of the data transmission method according to an embodiment of the present disclosure.
FIG. 19 is a ninth schematic flowchart of the data transmission method according to an embodiment of the present disclosure.
FIG. 20 is a tenth schematic flowchart of the data transmission method according to an embodiment of the present disclosure.
FIG. 21 is a schematic diagram of a transmission rate test result according to an embodiment of the present disclosure.

### DESCRIPTION OF EMBODIMENTS

To make objectives, technical solutions, and advantages of the present disclosure clearer, the present disclosure is described below in further detail with reference to drawings. The described embodiments are not to be considered as a limitation on the present disclosure. All other embodiments obtained by a person of ordinary skill in the art without creative efforts fall within the protection scope of the present disclosure.

In the following description, the term "some embodiments" describes subsets of all possible embodiments, but "some embodiments" may be the same subset or different subsets of all of the possible embodiments, and may be combined with each other if no conflict exists.

In the following description, the term "first/second/third" is merely configured for distinguishing between similar objects and does not represent a specific order of objects. "First/second/third" may be transposed at a specific order or a sequence when allowed, so that the embodiments of the present disclosure described herein can be implemented in an order other than those illustrated or described herein.

In the embodiments of the present disclosure, the term "module" or "unit" refers to a computer program or a part of the computer program that has a predetermined function and operates together with another relevant part to achieve a predetermined goal, and may be entirely or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or an overall unit including a function of the module or the unit.

Unless otherwise defined, all technical and scientific terms used in the embodiments of the present disclosure have the same meanings as those commonly understood by a person skilled in the art. Terms used in the embodiments of the present disclosure are merely intended to describe the embodiments of the present disclosure, and are not intended to limit the present disclosure.

In an exemplary application of the relevant data acquisition and processing in the embodiments of the present disclosure, the informed consent or individual consent of a subject of personal information needs to be obtained in strict accordance with the requirements of relevant laws and regulations, and subsequent data use and processing are carried out within the authorized scope of laws and regulations and the subject of the personal information.

Before the embodiments of the present disclosure are described in further detail, nouns and terms in the embodiments of the present disclosure are described, and the nouns and the terms in the embodiments of the present disclosure are subject to the following explanations.
1) Access layer: It is a lowest layer of a multilayer network architecture, which may be connected to a computing device to provide initial connection to a network for the computing device. In the embodiments of the present disclosure, the access layer includes a plurality of access switches and a plurality of first computing devices, and each access switch is connected to at least one first computing device. That is, one access switch may be connected to one or more first computing devices.
2) Aggregation layer: It is located between the access layer and the core layer, which serves as an intermediate layer between the access layer and the core layer, and is responsible for aggregating traffic from the access layer and providing a higher-level network service. In the embodiments of the present disclosure, the aggregation layer includes one or more aggregation sublayers, and each aggregation sublayer may include a plurality of aggregation switches. That is, one aggregation sublayer includes one or more aggregation switches.
3) Core layer: It is a top layer of a multilayer network architecture, which is responsible for data transmission at a transmission rate greater than a speed threshold. The core layer may be configured to connect to different aggregation switches, to ensure data transmission at a high rate (the transmission rate is greater than the speed threshold). In the embodiments of the present disclosure, the core layer may include one or more core sublayers, and each core sublayer may include one or more core switches.
4) Switch: In the embodiments of the present disclosure, it is a computer network device, and is configured to connect to computing devices to implement communication between the computing devices. For example, a first access switch, a second access switch, and an aggregation switch may be configured to connect to a first computing device and a second computing device, to implement communication between the first computing device and the second computing device.
5) Network interface card: It is a computer hardware device, which is configured to connect a computing device to a network, so that the computing device can transmit and receive data in a wired or wireless manner.
6) Computing device: In the embodiments of the present disclosure, it may be a device including a graphics processing unit (GPU). The GPU is a microprocessor that performs computing operations related to images and graphics in the computing device. According to an actual use requirement, the computing device may alternatively be a device including another processor.
7) High performance computing (HPC): In the embodiments of the present disclosure, it means resolving problems in different fields by using a computing capability of a computing cluster. The computing cluster includes a first computing device and a second computing device. For example, problems in fields such as scientific research, meteor forecasting, artificial intelligence, and image processing may be resolved by using the computing capability of the computing cluster.
8) Block: In the embodiments of the present disclosure, it is a computing unit including a plurality of devices (such as a GPU server and an access switch) in a high-performance computing scenario. Computing devices in the unit may be connected through a high-speed network, enabling them to operate collaboratively and jointly process computing tasks.
9) Cloud technology: It is a hosting technology that unifies a series of resources, such as hardware, software, and a network, in a wide area network or a local area network, to implement computing, storage, processing, and sharing of data.

However, the related art has the following technical problems:
1. In the related art, in a case that a first computing device and a second computing device need to perform data transmission, the first computing device may randomly transmit a data transmission request to a switch, so that the switch may transmit the data transmission request to the second computing device. To be specific, a routing path is formed by a path between the first computing device and a randomly determined switch and a path between the randomly determined switch and the second computing device, which means that the routing path is randomly determined. The randomly determined routing path may lead to load imbalance of the switch, resulting in a relatively low data transmission rate between the computing devices, that is, relatively low data transmission efficiency between the computing devices.
2. In the related art, for scenarios involving training artificial intelligence models, data transmission with a relatively large data amount needs to be performed between computing devices. Continuing from the technical problem 1, the low data transmission efficiency between computing devices leads to reduced efficiency in training artificial intelligence models.
3. In the related art, a hash function may be utilized to determine a routing path for data transmission between computing devices. For example, in some embodiments, hash operations are performed on information about the computing devices to obtain hash values, and the routing path is determined based on these hash values. However, this approach may cause local hotspots, i.e., load imbalance of a switch, resulting in a relatively low data transmission rate between computing devices, that is, relatively low data transmission efficiency between the computing devices.
4. In the related art, in a case that congestion occurs in a routing path, data transmission efficiency between computing devices is relatively low, and a communication bandwidth decreases.

Embodiments of the present disclosure provide a data transmission method and apparatus, an electronic device, a computer-readable storage medium, and a computer program product, which can improve data transmission efficiency.

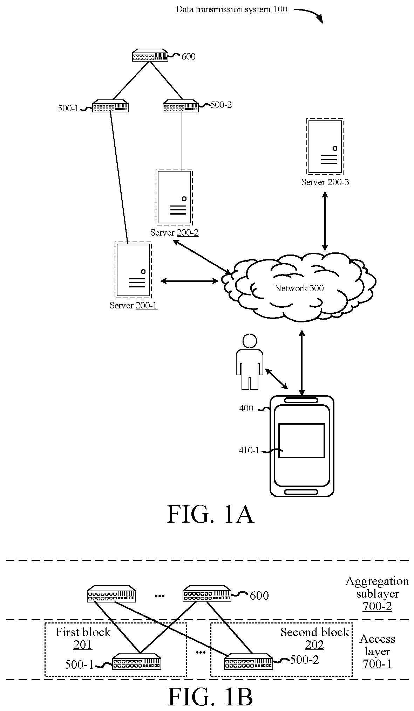

Referring to FIG. 1A, FIG. 1A is a schematic structural diagram of a data transmission system according to an embodiment of the present disclosure. A data transmission system 100 can support a data transmission application. In some embodiments, the data transmission system 100 includes a terminal 400, a server 200-1, a server 200-2, a server 200-3, and a switch. Only a first access switch 500-1, a second access switch 500-2, and an aggregation switch 600 are shown in FIG. 1A.

The server 200-1 is a first computing device, which includes a GPU and is provided with at least one network interface card. The server 200-2 is a second computing device, which includes a GPU and is provided with at least one network interface card.

A software defined network (SDN) controller is installed in the server 200-3. The terminal 400, the server 200-1, the server 200-2, and the server 200-3 are connected to each other by using a network 300. The network 300 may be a wide area network, a local area network, or a combination thereof.

The server 200-1 is connected to the first access switch 500-1 by using a network line, the first access switch 500-1 is connected to the aggregation switch 600 by using a network line, the aggregation switch 600 is connected to the second access switch 500-2 by using a network line, and the second access switch 500-2 is connected to the server 200-2 by using a network line.

The data transmission system 100 is applied to a multilayer network architecture. Referring to FIG. 1B, FIG. 1B is a first schematic structural diagram of a multilayer network architecture according to an embodiment of the present disclosure. The multilayer network architecture includes an access layer 700-1 and an aggregation layer, and the access layer 700-1 includes a plurality of access switches. Only the first access switch 500-1 and the second access switch 500-2 are shown in FIG. 1B. The first access switch 500-1 and the second access switch 500-2 belong to different blocks. To be specific, the first access switch 500-1 belongs to a first block 201, and the second access switch 500-2 belongs to a second block 202. The aggregation layer includes an aggregation sublayer 700-2, and the aggregation sublayer 700-2 includes a plurality of aggregation switches. Only the aggregation switch 600 is shown in FIG. 1B.

Still referring to FIG. 1A, in some embodiments, in a case that a user needs to perform data transmission between the server 200-1 and the server 200-2, in response to a data transmission instruction triggered based on a graphical interface 410-1 of the terminal 400, the terminal 400 may transmit a data transmission request generated based on the data transmission instruction to the server 200-3.

In some embodiments, for different scenarios, the terminal 400 may transmit different requests to the server 200-3, and the server 200-3 may determine, based on the received requests, whether data transmission needs to be performed. For example, for an image processing scenario, in response to an image processing instruction triggered based on the graphical interface 410-1 of the terminal 400, the terminal 400 may transmit an image processing request generated based on the image processing instruction to the server 200-3, and the server 200-3 may further determine whether data transmission needs to be performed.

In a case that the server 200-3 determines that data transmission needs to be performed, or in response to a data transmission request, the server 200-3 may obtain, for any network interface card in the server 200-1, a routing path configured for transmitting data to the network interface card, a one-to-one correspondence existing between the routing path and the network interface card. The routing path includes a first path between the network interface card and the first access switch 500-1 and a second path between the first access switch 500-1 and the aggregation switch 600.

The server 200-3 may transmit the routing path to the second access switch 500-2. The second access switch 500-2 is configured to forward, to the network interface card based on the routing path, data with a destination address corresponding to the network interface card and transmitted by the server 200-2.

In the data transmission method provided in the embodiments of the present disclosure, any network interface card of the first computing device corresponds to a routing path, and the second computing device may transmit data to any network interface card of the first computing device based on the routing path. Compared with randomly determining a routing path for data transmission, utilizing a routing path corresponding to a network interface card for data transmission can implement load balance for a switch that performs data transmission between the first computing device and the second computing device, and save time and resources for randomly determining a routing path, thereby improving a data transmission rate and improving resource utilization. In other words, the data transmission method provided in the embodiments of the present disclosure can improve data transmission efficiency and resource utilization during data transmission.

The electronic device provided in the embodiments of the present disclosure is described below. The electronic device includes a first electronic device and a second electronic device. The first electronic device includes an SDN controller. The first electronic device configured to implement the data transmission method provided in the embodiments of the present disclosure may be a terminal, a server, or a combination thereof. The second electronic device configured to implement the data transmission method provided in the embodiments of the present disclosure may be a switch, for example, an access switch.

The terminal may be various types of terminals such as a notebook computer, a tablet computer, a desktop computer, a set-top box, a smartphone, a smart speaker, a smartwatch, a smart television, or an on-board terminal. The server may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminals and the server may be connected directly or indirectly through wired or wireless communication, which is not limited in this embodiment of the present disclosure.

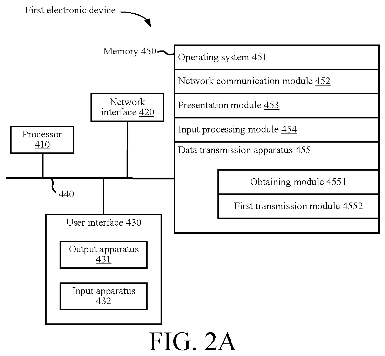

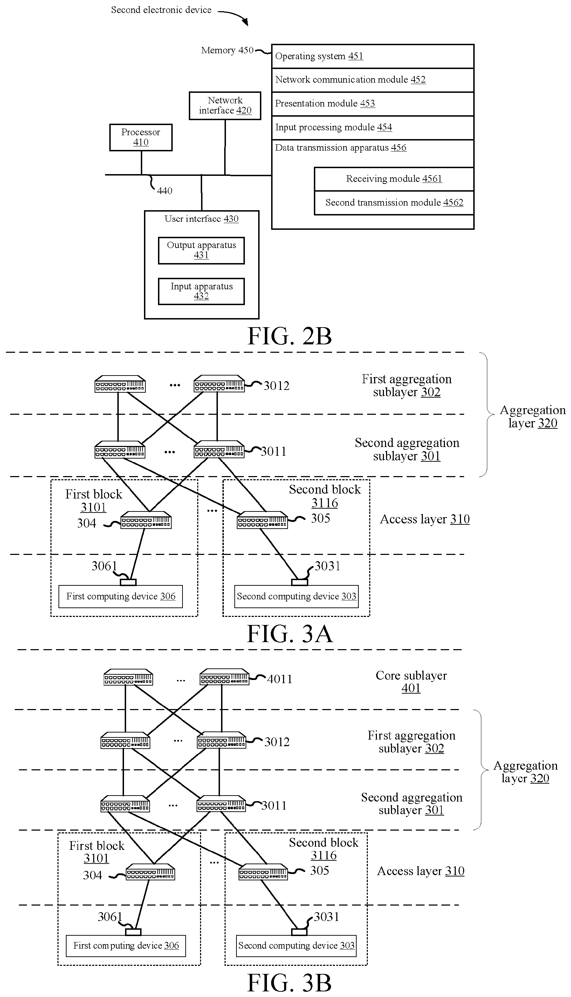

Referring to FIG. 2A to FIG. 2B, FIG. 2A is a schematic structural diagram of a first electronic device according to an embodiment of the present disclosure, and FIG. 2B is a schematic structural diagram of a second electronic device according to an embodiment of the present disclosure. The electronic devices (the first electronic device and the second electronic device) shown in FIG. 2A to FIG. 2B each include at least one processor 410, a memory 450, at least one network interface 420, and a user interface 430. Components in the electronic devices (the first electronic device and the second electronic device) are coupled together through a bus system 440. The bus system 440 is configured to implement connection and communication among these components. In addition to a data bus, the bus system 440 further includes a power bus, a control bus, and a status signal bus. However, for clarity of description, all types of buses in FIG. 2A to FIG. 2B are marked as the bus system 440.

The processor 410 may be an integrated circuit chip with a signal processing capacity, such as a general processor, a digital signal processor (DSP), or other programmable logic devices, discrete gate or transistor logic devices, discrete hardware components. The general processor may be a microprocessor, any conventional processor, or the like.

The user interface 430 includes one or more output apparatuses 431 that can present media content, including at least one of one or more speakers or one or more visual displays. The user interface 430 further includes one or more input apparatuses 432, including user interface components that facilitate user input, such as a keyboard, a mouse, a microphone, a touch display, a camera, and other input buttons and controls.

The memory 450 may be removable, non-removable, or a combination thereof. An exemplary hardware device includes a solid-state memory, a hard disk driver, an optical disk driver, and the like. In some embodiments, the memory 450 includes one or more storage devices that are physically away from the processor 410.

The memory 450 includes a volatile memory or a nonvolatile memory, or may include both the volatile memory and the nonvolatile memory. The nonvolatile memory may be a read-only memory (ROM). The volatile memory may be a random access memory (RAM). The memory 450 described in this embodiment of the present disclosure is intended to include any suitable type of memory.

In some embodiments, the memory 450 can store data to support various operations. Examples of the data include a program, a module, and a data structure, or a subset or a superset thereof. An exemplary description is provided below.

An operating system 451 includes system programs configured to process various basic system services and perform hardware-related tasks, for example, a framework layer, a core library layer, and a driver layer, which are configured to implement various basic services and process hardware-based tasks.

A network communication module 452 is configured to reach another electronic device through one or more (wired or wireless) network interfaces 420. An exemplary network interface 420 includes bluetooth, wireless fidelity (Wi-Fi), a universal serial bus (USB), and the like.

A presentation module 453 is configured to enable presentation of information through one or more output apparatuses 431 (such as a display and a speaker) associated with the user interface 430 (for example, a user interface configured for operating a peripheral device and displaying content and information).

An input processing module 454 is configured to detect one or more user inputs or interactions from one of the one or more input apparatuses 432 and translate the detected inputs or interactions.

In some embodiments, the data transmission apparatus provided in the embodiments of the present disclosure may be implemented through software. FIG. 2A shows a data transmission apparatus 455 stored in the memory 450, which may be software in a form of a program, a plugin, or the like, and includes the following software modules: an obtaining module 4551 and a first transmission module 4552. These modules are logical, and therefore may be combined in different manners or further split based on to-be-implemented functions. Functions of the modules are described below.

FIG. 2B shows a data transmission apparatus 456 stored in the second memory 450, which may be software in a form of a program, a plugin, or the like, and includes the following software modules: a receiving module 4561 and a second transmission module 4562. These modules are logical, and therefore may be combined in different manners or further split based on to-be-implemented functions. Functions of the modules are described below.

In some other embodiments, the data transmission apparatus provided in the embodiments of the present disclosure may be implemented by hardware. For example, the data transmission apparatus provided in the embodiments of the present disclosure may be a processor in a form of a hardware decoding processor, which is programmed to perform the data transmission method provided in the embodiments of the present disclosure. For example, the processor in the form of a hardware decoding processor may be one or more application specific integrated circuits (ASIC), a DSP, a programmable logic device (PLD), a complex programmable logic device (CPLD), a field-programmable gate array (FPGA), or other electronic elements.

A first data transmission method provided in the embodiments of the present disclosure is described below. As mentioned above, the first electronic device configured to implement the data transmission method provided in the embodiments of the present disclosure may be a terminal, a server, or a combination of thereof.

The data transmission method provided in the embodiments of the present disclosure is applied to a multilayer network architecture. For ease of understanding of the data transmission method provided in the embodiments of the present disclosure, the multilayer network architecture is described below. In the multilayer network architecture provided in the embodiments of the present disclosure, a network topological connection relationship among switches is a fat-tree topology.

In some embodiments, the multilayer network architecture includes an access layer and an aggregation layer. The aggregation layer includes at least one (one or more) aggregation sublayer, the access layer includes a plurality of access switches, and the aggregation sublayer includes a plurality of aggregation switches. For a case in which the aggregation layer includes one aggregation sublayer, refer to FIG. 1B.

In some embodiments, the access layer includes a first access switch and a second access switch. The first access switch is connected to at least one (one or more) first computing device, the second access switch is connected to at least one (one or more) second computing device, and the first access switch and the second switch belong to different blocks. For each block, one or more computing devices may exist in the block, which may be specifically set according to an actual use requirement.

Each computing device is provided with at least one network interface card. To be specific, the first computing device is provided with one or more network interface cards, the second computing device is provided with one or more network interface cards. A quantity of first computing devices may be the same as or different from a quantity of second computing devices. A quantity of network interface cards arranged on the first computing device may be the same as or different from a quantity of network interface cards arranged on the second computing device, which may be specifically set according to an actual use requirement.

For example, two first computing devices may be arranged, one second computing device may be arranged, eight network interface cards may be arranged on any first computing device, and 16 network interface cards may be arranged on the second computing device. That is, the quantity of first computing devices is different from the quantity of second computing devices, and the quantity of network interface cards arranged on the first computing device is different from the quantity of network interface cards arranged on the second computing device.

For the multilayer network architecture, a plurality of blocks are arranged. For each block, a quantity of access switches in the block is determined based on a quantity of ports of each access switch and a quantity of network interface cards, and a quantity of aggregation switches is determined based on a quantity of aggregation sublayers, a quantity of access switches in an access layer, and a quantity of ports of each access switch. In a case that one aggregation sublayer is arranged, the quantity of aggregation switches is equal to the quantity of ports of each access switch in the access layer.

In some embodiments, blocks may be defined based on a quantity of network interface cards. For example, each computing device corresponding to 16 network interface cards may be used as a block. In some embodiments, the blocks may be defined based on to-be-executed tasks, based on regions, or based on GPU types, which may be specifically set based on an actual use requirement.

A quantity of access switches in the access layer may be the same as a quantity of aggregation switches in an aggregation sublayer, or may be different from the quantity of aggregation switches in an aggregation sublayer, which may be specifically set according to an actual use requirement.

The multilayer network architecture provided in the embodiments of the present disclosure is described below by using an example with reference to FIG. 3A. Referring to FIG. 3A, FIG. 3A is a second schematic structural diagram of the multilayer network architecture according to an embodiment of the present disclosure. The multilayer network architecture includes an access layer 310 and an aggregation layer 320. The aggregation layer 320 includes two aggregation sublayers, which may be a first aggregation sublayer 302 and a second aggregation sublayer 301.

A quantity of switches (access switches) in the access layer 310, a quantity of switches (aggregation switches) in the first aggregation sublayer 302, and a quantity of switches (aggregation switches) in the second aggregation sublayer 301 may be the same or different, which may be specifically set according to an actual use requirement.

In FIG. 3A, the first aggregation sublayer 302 may include 64 aggregation switches, and an aggregation switch 3011 is shown in FIG. 3A. The second aggregation sublayer 301 may include 64 aggregation switches, and an aggregation switch 3012 is shown in FIG. 3A.

The access layer 310 may include access switches located in different blocks, and 16 blocks may be arranged. Only a first block 3101 and a second block 3116 are shown in FIG. 3A, and each block includes four access switches. In FIG. 3A, the first block 3101 includes four access switches, and the four access switches include a first access switch 304. The second block 3116 includes four access switches, and the four access switches include a second access switch 305.

Each access switch is connected to one or more first computing devices. In FIG. 3A, the first access switch 304 is connected to a first computing device 306, and the second access switch 305 is connected to a second computing device 303.

The first computing device 306 is provided with 16 network interface cards, and a network interface card 3061 is shown in FIG. 3A. The second computing device 303 is provided with 16 network interface cards, and a network interface card 3031 is shown in FIG. 3A. That is, a quantity of first computing devices is the same as a quantity of second computing devices, and a quantity of network interface cards arranged on the first computing device is the same as a quantity of network interface cards arranged on the second computing device.

In some embodiments, the multilayer network architecture includes an access layer, an aggregation layer, and a core layer. For the access layer and the aggregation layer, refer to the foregoing corresponding descriptions of the access layer and the aggregation layer. Details are not described herein. The core layer may include at least one (one or more) core sublayer, and the core sublayer includes a plurality of core switches.

A quantity of core sublayers may be set according to an actual use requirement. For each core sublayer, a quantity of core switches in the core sublayer is determined based on a quantity of aggregation switches in an aggregation sublayer and a quantity of ports of each aggregation switch. A quantity of aggregation switches in an aggregation sublayer may be the same as or different from a quantity of core switches in a core sublayer, which may be specifically set according to an actual use requirement.

Referring to FIG. 3B, FIG. 3B is a third schematic structural diagram of the multilayer network architecture according to an embodiment of the present disclosure. The multilayer network architecture includes an access layer 310, an aggregation layer 320, and a core layer. For descriptions of the access layer 310 and the aggregation layer 320, refer to FIG. 3A, and details are not described herein.

The aggregation layer 320 includes two aggregation sublayers, which may be a first aggregation sublayer 302 and a second aggregation sublayer 301. The core layer includes one core sublayer 401. A quantity of switches (core switches) in the core sublayer 401 may be the same as any one or more of a quantity of switches (access switches) in the access layer 310, a quantity of switches (aggregation switches) in the first aggregation sublayer 302, or a quantity of switches (aggregation switches) in the second aggregation sublayer 301, or may be different from all of them. In FIG. 3B, the core sublayer 401 may include 64 core switches, but only a core switch 4011 is shown in FIG. 3B.

In some embodiments, in a case that the quantity of computing devices is greater than a preset quantity threshold, a demand for a communication bandwidth increases. Therefore, a core layer may be arranged, to achieve data transmission between computing devices of a quantity greater than the preset quantity threshold. In addition, since the core layer can further improve redundancy of the multilayer network architecture, even if an abnormality occurs on the routing path, data transmission can still be performed, thereby improving data transmission stability.

In some embodiments, the same block may include one or more access switches, one access switch has a plurality of uplink ports (that is, second ports), and one aggregation sublayer includes a plurality of aggregation switches. For each access switch, different uplink ports are connected to different aggregation sublayers corresponding to different aggregation switches, and an uplink port of the access switch is connected to a downlink port of an aggregation switch.

In some embodiments, one aggregation sublayer includes a plurality of aggregation switches, one aggregation switch includes a plurality of uplink aggregation ports, and a plurality of aggregation sublayers are arranged. For one aggregation switch, different uplink aggregation ports are connected to different aggregation switches in another aggregation sublayer. That is, the another aggregation sublayer includes a plurality of aggregation switches. An uplink port of an aggregation switch in one aggregation sublayer is connected to a downlink port of an aggregation switch in another aggregation sublayer.

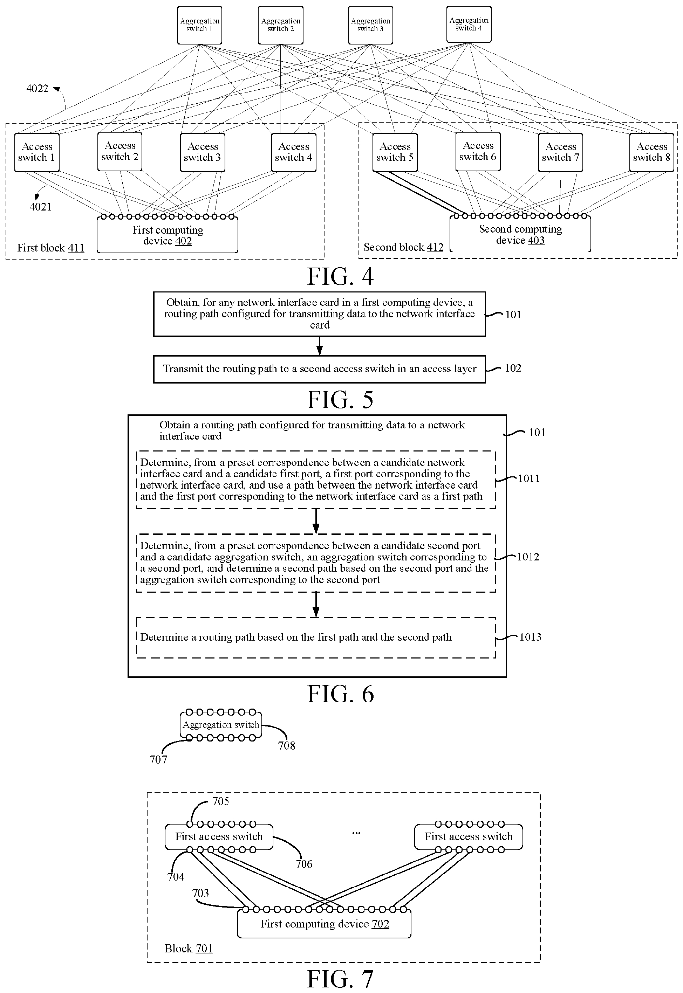

For ease of understanding of the data transmission method provided in the embodiments of the present disclosure, referring to FIG. 4, FIG. 4 is a schematic diagram of the data transmission method according to an embodiment of the present disclosure. The data transmission method provided in the embodiments of the present disclosure is described below with reference to FIG. 4.

FIG. 4 shows a connection relationship among a computing device, an access switch, and an aggregation switch. 16 blocks may be arranged. FIG. 4 shows a first block 411 and a second block 412. Each block may include one computing device and four access switches. In FIG. 4, the first block 411 includes a first computing device 402, an access switch 1, an access switch 2, an access switch 3, and an access switch 4. The first computing device 402 is connected to each of the access switch 1, the access switch 2, the access switch 3, and the access switch 4.

The second block 412 includes a second computing device 403, an access switch 5, an access switch 6, an access switch 7, and an access switch 8. The second computing device 403 is connected to each of the access switch 5, the access switch 6, the access switch 7, and the access switch 8.

For one access switch, different ports in the access switch are connected to different aggregation switches. In FIG. 4, the access switch 1 includes four ports. In some embodiments, the access switch 1 may be connected to an aggregation switch 1, an aggregation switch 2, an aggregation switch 3, and an aggregation switch 4.

The access switch 2 includes four ports. In some embodiments, the access switch 2 may be connected to the aggregation switch 1, the aggregation switch 2, the aggregation switch 3, and the aggregation switch 4.

The access switch 3 includes four ports. In some embodiments, the access switch 3 may be connected to the aggregation switch 1, the aggregation switch 2, the aggregation switch 3, and the aggregation switch 4.

The access switch 4 includes four ports. In some embodiments, the access switch 4 may be connected to the aggregation switch 1, the aggregation switch 2, the aggregation switch 3, and the aggregation switch 4.

The access switch 5 includes four ports. In some embodiments, the access switch 5 may be connected to the aggregation switch 1, the aggregation switch 2, the aggregation switch 3, and the aggregation switch 4.

The access switch 6 includes four ports. In some embodiments, the access switch 6 may be connected to the aggregation switch 1, the aggregation switch 2, the aggregation switch 3, and the aggregation switch 4.

The access switch 7 includes four ports. In some embodiments, the access switch 7 may be connected to the aggregation switch 1, the aggregation switch 2, the aggregation switch 3, and the aggregation switch 4.

The access switch 8 includes four ports. In some embodiments, the access switch 8 may be connected to the aggregation switch 1, the aggregation switch 2, the aggregation switch 3, and the aggregation switch 4.

A path between the computing device and the access switch is a first path, and a path between the access switch and the aggregation switch is a second path. FIG. 4 shows 16 routing paths. In a case that data transmission needs to be performed, any one of the routing paths shown in FIG. 4 may be utilized for data transmission.

The data transmission method provided in the embodiments of the present disclosure is described below with reference to FIG. 5. Referring to FIG. 5, FIG. 5 is a first schematic flowchart of the data transmission method according to an embodiment of the present disclosure. The data transmission method provided in the embodiments of the present disclosure is described below with reference to operations shown in FIG. 5 and by using an example in which an execution body is a server.

Operation 101: Obtain, for any network interface card in a first computing device, a routing path configured for transmitting data to the network interface card.

In a case that a user needs to perform data transmission, in some embodiments, in response to a data transmission instruction triggered for a terminal, the terminal may transmit a data transmission request to the server, so that the server may perform operation 101.

In some embodiments, for a scenario in which HPC needs to be performed, in response to a target instruction triggered by the terminal, the terminal may transmit a target request to the server, so that the server may perform operation 101. The target instruction and the target request may be requests in the HPC scenario. For example, for scenarios such as model training, weather prediction, and big data processing, the target request may correspondingly be a model training request, a weather prediction request, or a data processing request.

Model training, weather prediction, big data processing, and the like may be implemented through cloud computing. The cloud computing distributes a computing task onto a large quantity of computing devices, to obtain a computing resource according to a requirement. The model training may be an artificial intelligence cloud service.

In some embodiments, operation 101 may be implemented in the following manner. For any network interface card in the first computing device that needs to perform data transmission with the second computing device, a routing path configured for transmitting data to the network interface card may be obtained.

The routing path may be a border gateway protocol (BGP) path. BGP is a protocol configured for exchanging routing information between different autonomous systems (AS). It is mainly configured for transferring routing and reachability information between networks on the Internet, which is a key technology for implementing interconnection between different network areas. Certainly, the routing path may alternatively be a path corresponding to another protocol. For example, the routing path may alternatively be a policy-based routing path. This may be specifically set according to an actual use requirement.

A one-to-one correspondence between a routing path and a network interface card. That is, each network interface card corresponds to a routing path. For example, the first computing device includes a network interface card 1 and a network interface card 2, the network interface card 1 corresponds to a routing path 1, and the network interface card 2 corresponds to a routing path 2.

The routing path includes a first path between the network interface card and a first access switch in an access layer and a second path between the first access switch and an aggregation switch in at least one aggregation sublayer. For example, referring to FIG. 4, a path between a network interface card of the first computing device 402 and the access switch 1 (that is, the first access switch) is a first path 4021, and a path between the access switch 1 and the aggregation switch 1 is a second path 4022. That is, the routing path includes the first path 4021 and the second path 4022.

Referring to FIG. 6, FIG. 6 is a second schematic flowchart of the data transmission method according to an embodiment of the present disclosure. The operation of "obtaining a routing path configured for transmitting data to the network interface card" shown in FIG. 5 is described below with reference to operations shown in FIG. 6. The first access switch has at least one first port (an uplink port), and has a second port (a downlink port) in a one-to-one correspondence with the first port.

Operation 1011: Determine, from a preset correspondence between a candidate network interface card and a candidate first port, a first port corresponding to the network interface card, and use a path between the network interface card and the first port corresponding to the network interface card as a first path.

In some embodiments, operation 1011 may be implemented in the following manner. The preset correspondence between a candidate network interface card and a candidate first port is determined by using a topological connection relationship between the first computing device and the first access switch. For the topological connection relationship between the first computing device and the first access switch, refer to the description for FIG. 4.

In some embodiments, a computing device and an access switch included in a block may be obtained. Different blocks correspond to different computing devices and access switches, and a quantity of blocks is an integer greater than 2, which may be determined according to an actual situation. For example, the first block includes a first computing device and a first access switch, the first access switch is connected to the first computing device, and the first access switch belongs to the access layer. The second block includes a second computing device and a second access switch, the second access switch is connected to the second computing device, and the second access switch belongs to the access layer. The topological connection relationship is a connection relationship between a computing device and an access switch that belong to the same block.

For any network interface card in the first computing device, a first port corresponding to the network interface card may be determined from the preset correspondence between a candidate network interface card and a candidate first port, and a path between the network interface card and the first port corresponding to the network interface card may be used as the first path. In other words, the first path is a path between the network interface card and the first port corresponding to the network interface card. The first port corresponding to the network interface card is a first port of the first access switch. In other words, the first path is a path between the network interface card and the first access switch.

Referring to FIG. 7, FIG. 7 is a first schematic diagram of a routing path according to an embodiment of the present disclosure. FIG. 7 shows a block 701. The block 701 includes a first computing device 702 and a first access switch 706. The first computing device 702 is provided with a plurality of network interface cards. A network interface card 703 is shown in FIG. 7. The first access switch 706 includes a plurality of ports, which may include a first port 704.

A first port 704 corresponding to the network interface card 703 is determined from the preset correspondence between a candidate network interface card and a candidate first port. After the first port 704 corresponding to the network interface card 703 is determined, a path between the network interface card 703 and the first port 704 may be used as the first path.

In other words, the first path is a path between the network interface card 703 of the first computing device 702 and the first port 704 of the first access switch 706. In other words, the first path is a path between the first computing device 702 and the first access switch 706. In this way, the first path can be quickly and accurately determined based on the correspondence between a network interface card and a port of an access switch, and a utilization rate of computing resources can be improved.

Operation 1012: Determine, from a preset correspondence between a candidate second port and a candidate aggregation switch, an aggregation switch corresponding to the second port, and determine a second path based on the second port and the aggregation switch corresponding to the second port.

In some embodiments, operation 1012 may be implemented in the following manner. Since a second port in a one-to-one correspondence with the first port exists, after the first port corresponding to the network interface card is determined, the second port corresponding to the network interface card may be determined.

For example, in FIG. 7, the first access switch 706 further includes a second port 705. The first port 704 is in a one-to-one correspondence with the second port 705. Therefore, after the first port 704 corresponding to the network interface card 703 is determined, a second port 705 corresponding to the network interface card 703 may be determined.

After the second port corresponding to the network interface card is determined, the aggregation switch corresponding to the second port may be determined from the preset correspondence between a candidate second port and a candidate aggregation switch. The preset correspondence between a candidate second port and a candidate aggregation switch is determined by using a topological connection relationship between the first access switch and the aggregation switch. For the topological connection relationship between the first access switch and the aggregation switch, refer to the description for FIG. 4.

After the aggregation switch corresponding to the second port is determined, the second path may be determined based on the second port and the aggregation switch corresponding to the second port. In some embodiments, for a case in which one aggregation sublayer is arranged, a path between the second port and the aggregation switch corresponding to the second port may be used as the second path. In other words, the second path is a path between the second port and the aggregation switch corresponding to the second port. In other words, the second path is a path between the first access switch and an aggregation switch in an aggregation sublayer.

In some embodiments, the aggregation switch corresponding to the second port includes a plurality of first aggregation ports (that is, downlink aggregation ports). A first aggregation port corresponding to the second port may be determined from a preset correspondence between a candidate second port and a candidate first aggregation port, and a path between the second port and the first aggregation port is used as the second path.

For example, in FIG. 7, the aggregation switch 708 includes a first aggregation port 707. A first aggregation port 707 corresponding to the second port 705 is determined from the preset correspondence between a candidate second port and a candidate first aggregation port, and a path between the second port 705 and the first aggregation port 707 may be used as the second path. In other words, a path between the first access switch 706 and the aggregation switch 708 may be used as the second path.

In a case that the quantity of aggregation sublayers is greater than 1, that is, in a case that a plurality of aggregation sublayers are arranged, the second port corresponds to a plurality of aggregation switches. Aggregation switches corresponding to any two second ports belong to different aggregation sublayers, and a preset topological connection relationship exists between aggregation switches corresponding to the plurality of second ports.

In some embodiments, a subpath may be determined based on the first access switch and aggregation switches that belong to different aggregation sublayers, and then the second path may be determined based on the subpath. A quantity of subpaths is consistent with a quantity of aggregation switches corresponding to the second port, and aggregation switches corresponding to different second ports belong to different aggregation sublayers. Therefore, the quantity of subpaths is consistent with the quantity of aggregation sublayers.

The aggregation switch corresponding to the second port includes a first aggregation switch and a second aggregation switch, the first aggregation switch and the second aggregation switch belong to different aggregation sublayers, the first access switch is connected to the second aggregation switch, and the second aggregation switch is connected to the first aggregation switch.

Certainly, a third aggregation switch may be further arranged according to an actual use requirement, and the third aggregation switch and the first aggregation switch, and the third aggregation switch and the second aggregation switch respectively belong to different aggregation sublayers, to determine the second path. In other words, a quantity of aggregation switches belonging to different aggregation sublayers may be set according to an actual use requirement. In this way, the second path can be quickly and accurately determined based on a correspondence between ports of aggregation switches belonging to different aggregation sublayers, and a utilization rate of computing resources can be improved.

The manner of "determining a second path based on the second port and the aggregation switch corresponding to the second port" is described below. A path between the second port and the second aggregation switch may be used as a first subpath.

In some embodiments, the second aggregation switch includes a plurality of first aggregation ports (that is, downlink ports of the aggregation switch). A first aggregation port corresponding to the second port may be determined from the preset correspondence between a candidate second port and a candidate first aggregation port, and a path between the second port and the first aggregation port is used as the first subpath. The first subpath is the second path existing when one aggregation sublayer is arranged. For details, refer to the description of determining the second path when one aggregation sublayer is arranged, which are not described herein.

A routing path between the second aggregation switch and the first aggregation switch is used as a second subpath. In some embodiments, the second aggregation switch includes a plurality of first aggregation ports (that is, downlink ports of the aggregation switch) and a plurality of second aggregation ports (that is, uplink ports of the aggregation switch). The first aggregation ports are in a one-to-one correspondence to the second aggregation ports. Therefore, a second aggregation port corresponding to the first aggregation port may be first determined.

The first aggregation switch includes a plurality of first aggregation ports. A first aggregation port corresponding to the second aggregation port may be determined from a preset correspondence between a candidate first aggregation port and a candidate second aggregation port, and a path between the first aggregation port and the second aggregation port is used as the second subpath. To be specific, the path between the first aggregation port of the first aggregation switch and the second aggregation port of the second aggregation switch is used as the second subpath.

After the first subpath and the second subpath are obtained, the second path may be determined based on the first subpath and the second subpath. In some embodiments, corresponding ports exist between the first subpath and the second subpath, and the corresponding ports belong to the same switch. The first subpath and the second subpath may be concatenated by using the corresponding ports between the first subpath and the second subpath, to determine the second path.

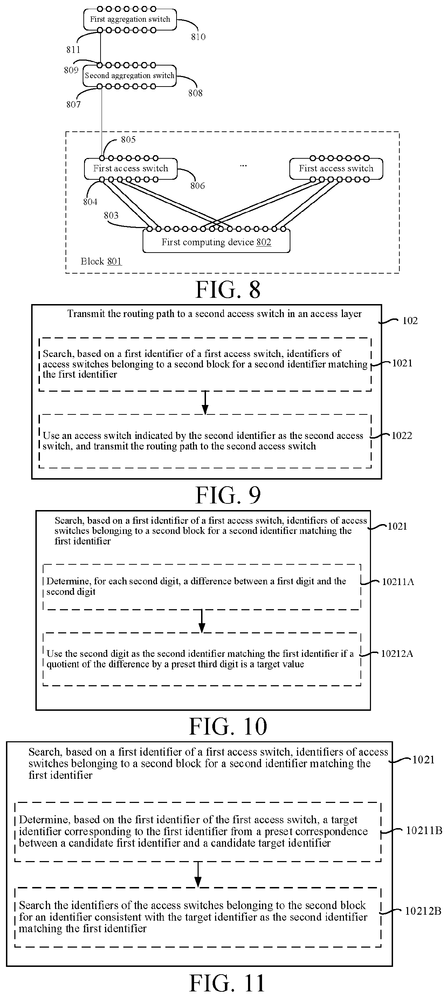

Referring to FIG. 8, FIG. 8 is a second schematic diagram of the routing path according to an embodiment of the present disclosure. A manner of determining the first path and the second path is described below by using an example with reference to FIG. 8. FIG. 8 shows a block 801. The block 801 includes a first computing device 802 and a first access switch 806. The first computing device 802 is provided with a plurality of network interface cards. A network interface card 803 is shown in FIG. 8. The first access switch 806 includes a plurality of ports, which may include a first port 804.

A first port 804 corresponding to the network interface card 803 is determined from the preset correspondence between a candidate network interface card and a candidate first port. After the first port 804 corresponding to the network interface card 803 is determined, a path between the network interface card 803 and the first port 804 may be used as the first path. In other words, the path between the network interface card 803 of the first computing device 802 and the first port 804 of the first access switch 806 is the first path.

The first access switch 806 further includes a second port 805. The first port 804 is in a one-to-one correspondence with the second port 805. After the first port 804 corresponding to the network interface card 803 is determined, a second port 805 corresponding to the network interface card 803 may be determined.

A second aggregation switch 808 includes a first aggregation port 807. A first aggregation port 807 corresponding to the second port 805 is determined from the preset correspondence between a candidate second port and a candidate first aggregation port, and a path between the second port 805 and the first aggregation port 807 may be used as the first subpath. To be specific, the path between the second port 805 of the first access switch 806 and the first aggregation port 807 of the second aggregation switch 808 may be used as the first subpath.

The second aggregation switch 808 further includes a second aggregation port 809. The first aggregation port 807 is in a one-to-one correspondence with the second aggregation port 809, and a second aggregation port 809 corresponding to the first aggregation port 807 may be determined. The first aggregation switch 810 includes a first aggregation port 811. A first aggregation port 811 corresponding to the second aggregation port 809 is determined from the preset correspondence between a candidate first aggregation port and a candidate second aggregation port, and a path between the second aggregation port 809 and the first aggregation port 811 is used as the second subpath. To be specific, the path between the second aggregation port 809 of the second aggregation switch 808 and the first aggregation port 811 of the first aggregation switch 810 may be used as the second subpath.

The first subpath and the second subpath are concatenated by using corresponding ports between the first subpath and the second subpath. In FIG. 8, the first subpath is the path between the second port 805 and the first aggregation port 807, and the second subpath is the path between the second aggregation port 809 and the first aggregation port 811.

The first aggregation port 807 corresponds to the second aggregation port 809, and both the first aggregation port 807 and the second aggregation port 809 belong to the second aggregation switch 808. The first subpath between the second port 805 and the first aggregation port 807 may be concatenated with the second subpath between the second aggregation port 809 and the first aggregation port 811, to determine the second path. In this way, an accurate first path and an accurate second path can be obtained.

In some embodiments, for a subpath, target subports corresponding to at least two subpaths may be determined. The corresponding subpaths are concatenated based on the target subports, and a concatenated subpath is determined as a corresponding path. For example, for the first subpath and the second subpath, target subports corresponding to the first subpath and the second subpath may be determined, the first subpath and the second subpath are concatenated based on the target subports, to obtain a concatenated subpath, and the concatenated subpath is determined as the second path.

Operation 1013: Determine the routing path based on the first path and the second path.

In some embodiments, operation 1013 may be implemented in the following manner: Corresponding ports exist between the first path and the second path, and the corresponding ports belong to the same switch. The first path and the second path may be concatenated based on the corresponding ports between the first path and the second path, to determine the routing path.

For example, in FIG. 8, the second port 805 corresponds to the first port 804, and both the second port 805 and the first port 804 belong to the first access switch 806. Therefore, the first path and the second path may be concatenated, to determine the routing path.

In some embodiments, the corresponding ports are target ports, which include an uplink port and a downlink port of the same switch. Target ports in the first path and the second path may be determined. For example, referring to FIG. 7, the target ports may be the second port 705 and the first port 704 of the first access switch 706.

The first path and the second path are concatenated based on the target ports, and a concatenated path is determined as the routing path. For example, referring to FIG. 7, after the target ports are determined, the first path and the second path may be concatenated based on the second port 705 and the first port 704 of the first access switch 706, to obtain a target path. The target path is a path among the network interface card 703, the first port 704, the second port 705, and the first aggregation port 707.

Through operation 1011 to operation 1013, the routing path can be accurately determined in different manners based on the quantity of aggregation sublayers in the aggregation layer, the routing path being configured for the second computing device to transmit data to the first computing device. This can improve data transmission accuracy.

In some embodiments, the multilayer network architecture further includes a core layer. The core layer includes one or more core sublayers, and each core sublayer includes a plurality of core switches. That is, the core layer includes a plurality of core switches.

In a case that one core layer is arranged, the first path between the network interface card and the first access switch in the access layer may be obtained, and the second path between the first access switch and the aggregation switch in at least one aggregation sublayer may be obtained. For manners of obtaining the first path and obtaining the second path, refer to the descriptions for operation 1011 and operation 1012 shown in FIG. 6, which are not described in detail herein.

If one aggregation sublayer is arranged, the aggregation switch in the second path is the aggregation switch corresponding to the second port. If a plurality of aggregation sublayers are arranged, the aggregation switch in the second path is the first aggregation switch. In other words, an aggregation sublayer to which the aggregation switch in the second path belongs is adjacent to the core layer.

In some embodiments, a target core switch corresponding to the aggregation switch in the second path may be determined from a preset correspondence between a candidate aggregation switch and a candidate core switch, and a path between the aggregation switch in the second path and the target core switch may be used as a third path. The routing path is determined based on the first path, the second path, and the third path.

In some embodiments, corresponding ports exist between the first path and the second path, and the corresponding ports belong to the same switch. The first path and the second path may be concatenated based on the corresponding ports between the first path and the second path. Correspondingly, corresponding ports exist between the second path and the third path, and the corresponding ports belong to the same aggregation switch. The second path and the third path may be concatenated based on the corresponding ports between the second path and the third path. In this way, a routing path may be determined.

In some embodiments, the target ports may include a first target port and a second target port. The first target ports in the first path and the second path may be determined, and the second target ports in the second path and the third path may be determined. The first path and the second path may be concatenated based on the first target ports, to obtain a first concatenated path. The first concatenated path and the third path may be concatenated based on the second target ports, to obtain a second concatenated path. The second concatenated path may be determined as a target path, which means that a target path is obtained.

In a case that a plurality of core layers are arranged, the first path and the second path may be obtained. For manners of obtaining the first path and the second path, refer to the descriptions for operation 1011 and operation 1012 shown in FIG. 6, which are not described in detail herein.

The core layer includes a plurality of core sublayers, and the target core switch includes a first core switch and a second core switch. In other words, the core layer may include a first core switch and a second core switch. The first core switch and the second core switch belong to different core sublayers, the first core switch is connected to the second core switch, and the second core switch is connected to the aggregation switch in the second path.

Certainly, a third core switch may be further arranged according to an actual use requirement, and the third core switch and the first core switch, and the third core switch and the second core switch respectively belong to different aggregation sublayers, to determine the third path. In other words, a quantity of core switches belonging to different core sublayers may be set according to an actual use requirement.

In some embodiments, a target core switch corresponding to the aggregation switch in the second path may be determined from the preset correspondence between a candidate aggregation switch and a candidate core switch. The target core switch is the second core switch.

A path between the aggregation switch in the second path and the second core switch may be used as a fifth subpath, and a path between the second core switch and the first core switch may be used as a sixth subpath. Then the third path may be determined based on the fifth subpath and the sixth subpath. Equivalent replacement may be made on the manner of determining the third path to obtain a manner of determining the second path. Details are not described herein. Then the routing path may be determined based on the first path, the second path, and the third path.

In some embodiments, for the fifth subpath and the sixth subpath, target subports corresponding to the fifth subpath and the sixth subpath may be determined, the fifth subpath and the sixth subpath are concatenated based on the target subports, to obtain a concatenated subpath, and the concatenated subpath is determined as the third path.

In the data transmission method provided in this embodiment of the present disclosure, the routing path can be accurately determined in different manners based on the quantity of aggregation sublayers in the aggregation layer and the quantity of core sublayers in the core layer. The quantity of aggregation sublayers is consistent with the quantity of subpaths corresponding to the aggregation sublayers, and the quantity of subpaths corresponding to the aggregation sublayers is a quantity of subpaths of the determined second path. The quantity of core sublayers is consistent with the quantity of subpaths corresponding to the core sublayers, and the quantity of subpaths corresponding to the core sublayers is a quantity of subpaths of the determined third path. The routing path is configured for the second computing device to transmit data to the first computing device. This can improve data transmission accuracy.

Operation 102: Transmit the routing path to the second access switch in the access layer.

In some embodiments, operation 102 may be implemented in the following manner. The first access switch belongs to the first block. Referring to FIG. 9, FIG. 9 is a third schematic flowchart of the data transmission method according to an embodiment of the present disclosure. Operation 102 shown in FIG. 5 is described below with reference to operations shown in FIG. 9.

Operation 1021: Search, based on a first identifier of the first access switch, identifiers of access switches belonging to a second block for a second identifier matching the first identifier.

In some embodiments, the first identifier is a first digit, a plurality of access switches belong to the second block, and identifiers of the access switches belong to the second block are second digits. Referring to FIG. 10, FIG. 10 is a fourth schematic flowchart of the data transmission method according to an embodiment of the present disclosure. Operation 1021 shown in FIG. 9 is described below with reference to operations shown in FIG. 10.

Operation 10211A: Determine, for each second digit, a difference between a first digit and the second digit.

To enable network interface cards with the same address corresponding to computing devices belonging to different blocks to transmit data by using the same switch, thereby improving data transmission efficiency, quantities of network interface cards included in the blocks are set to be the same. For each block, a sequence may be set for the network interface cards, and a sequence may be set for access switches in the block based on the sequence of the network interface cards, and the first digit and the second digit may be set according to the sequence corresponding to the access switches.

The first digit is configured for identifying the first access switch in the first block, and the first digit is configured for uniquely identifying the first access switch. For example, the first block includes a first access switch and an access switch 1, and the first digit of the first access switch is 1. Each access switch in the second block has a second digit, and the second digit is in a one-to-one correspondence with the access switch in the second block. To determine a second digit, a difference between the first digit and each second digit may be determined first.

Operation 10212A: Use the second digit as the second identifier matching the first identifier if a quotient of the difference by a preset third digit is a target value.

In some embodiments, the third digit is a quantity of access switches in a block (that is, the first block) to which the first access switch corresponding to the access layer belongs. The quantity of access switches in the first block may be determined based on a quantity of ports of each access switch and a quantity of network interface cards in the first block.

Setting of the target value is described below. The target value in this embodiment of the present disclosure is preset. The target value is related to setting of the first digit and the second digit. For access switches in blocks located at the same address, if a first digit corresponding to a first access switch is the same as a second digit of an access switch in the second block at the corresponding address, the target value is 0.

If the first digit corresponding to the first access switch is not the same as the second digit of the access switch in the second block at the corresponding address, and a target difference between the first digit and the second digit corresponding to the address is the same as a target difference between a digit and a second digit corresponding to another address, the target value includes an absolute value and a remainder of an integer corresponding to a quotient between the target difference and the third digit.

If the quotient is not the target value, it indicates that the second digit cannot be used as the second identifier matching the first identifier. If the quotient is the target value, it indicates that the second digit may be used as the second identifier matching the first identifier.

In a case that the target value is 0, if the quotient is not the target value, it indicates that a remainder obtained by dividing the first digit by the third digit is different from a remainder obtained by dividing the second digit by the third digit, indicating that the second digit may not be used as the second identifier matching the first identifier.

If the quotient is the target value, it indicates that the remainder obtained by dividing the first digit by the third digit is the same as the remainder obtained by dividing the second digit by the third digit, that is, the first digit and the second digit are congruent modulo N, N being a quotient obtained by dividing the difference by the third digit, indicating that the second digit may be used as the second identifier matching the first identifier.

For example, two access witches are arranged in the first block. The first block includes a first access switch. The second block includes an access switch 2 and an access switch 3. A first digit of the first access switch is 3, a second digit of the access switch 2 is 3, and a second digit of the access switch 3 is 4.

A difference between the first digit and the second digit of the access switch 2 is calculated, which is 0, and a quantity of access switches is 2. A quotient between the difference and the third digit (that is, the quantity of access switches) is 0. In this case, the second digit (3) may be used as the second identifier matching the first identifier.

A difference between the first digit and the second digit of the access switch 3 is calculated, which is -1, and a quantity of access switches is 2. A quotient between the difference and the third digit (that is, the quantity of access switches) is not 0. In this case, the second digit (4) may not be used as the second identifier matching the first identifier.

For another example, the target value includes an absolute value of 2 and a remainder of 2 of an integer, the quantity of access switches in the first block is 2, the first block includes a first access switch, and the second block includes an access switch 4 and an access switch 5.

A first digit of the first access switch is 3, a second digit of the access switch 4 is 13, and a second digit of the access switch 5 is 14. A difference between the first digit and the second digit of the access switch 4 is calculated, which is -10, and a quantity of access switches is 2. A quotient between the difference and the third digit (that is, the quantity of access switches) is 2 with a remainder of 2, which is the same as the target value. In this case, the second digit (13) may be used as the second identifier matching the first identifier.

A difference between the first digit and the second digit of the access switch 5 is calculated, which is -11, and a quantity of access switches is 2. A quotient between the difference and the third digit (that is, the quantity of access switches) is 2 with a remainder of 3, which is not the same as the target value. In this case, the second digit (14) may not be used as the second identifier matching the first identifier.

Through operations 10211A-10212A, the second identifier matching the first identifier can be accurately found. Because the second identifier is configured for determining a second access switch, the second access switch can be accurately determined.

In some embodiments, referring to FIG. 11, FIG. 11 is a fifth schematic flowchart of the data transmission method according to an embodiment of the present disclosure. Operation 1021 shown in FIG. 9 is described below with reference to operations shown in FIG. 11.

Operation 10211B: Determine, based on the first identifier of the first access switch, a target identifier corresponding to the first identifier from a preset correspondence between a candidate first identifier and a candidate target identifier.

In some embodiments, to enable network interface cards with the same address corresponding to computing devices belonging to different blocks to transmit data by using the same switch, thereby improving data transmission efficiency, quantities of network interface cards included in the blocks are set to be the same. For two different blocks, network interface cards with the same address may be marked, and a correspondence is set between flags of switches connected to the network interface cards with the same address.

Operation 10211B may be implemented in the following manner: The target identifier corresponding to the first identifier is determined from the preset correspondence between a candidate first identifier and a candidate target identifier based on the first identifier of the first access switch.

The first identifier may be an identifier set by a user according to an actual use requirement. In some embodiments, the first identifier may be a name of the first access switch. Correspondingly, the preset correspondence between a candidate first identifier and a candidate target identifier is a preset correspondence between a name of a candidate access switch in the first block and a target name of the candidate access switch. In other words, the target identifier is the target name.

In some embodiments, the first identifier may be a character string of the first access switch. Correspondingly, the preset correspondence between a candidate first identifier and a candidate target identifier is a preset correspondence between a character string of a candidate access switch in the first block and a target character string of the candidate access switch. In other words, the target identifier is the target character string.

Operation 10212B: Search the identifiers of the access switches belonging to the second block for an identifier consistent with the target identifier as the second identifier matching the first identifier.

In some embodiments, in operation 10212B, after the target identifier corresponding to the first identifier is determined, the identifiers of the access switches belonging to the second block are searched for the identifier consistent with the target identifier as the second identifier matching the first identifier. Through operations 10211B-10212B, the target identifier matching the first identifier can be accurately found. Because the target identifier is configured for determining a second access switch, the second access switch can be accurately determined.

Operation 1022: Use an access switch indicated by the second identifier as the second access switch, and transmit the routing path to the second access switch.

In some embodiments, the second access switch may forward, to the network interface card based on the routing path, data with a destination address corresponding to the network interface card and transmitted by the second computing device. The destination address is an address of the network interface card on the first computing device. The second computing device is provided with a plurality of network interface cards. In some embodiments, the second access switch may forward, to the network interface card based on the routing path, the data that is of the network interface card and that corresponds to the destination address transmitted by a network interface card of the second computing device.

In some embodiments, the second access switch may receive the data that is of the network interface card and that corresponds to the destination address transmitted by the second computing device. The destination address may include an identifier of the network interface card. The identifier of the network interface card may be a name of the network interface card, a character string uniquely identifying the network interface card, or the like. The identifier of the network interface card may alternatively include the name of the network interface card and an identifier of a computing device on which the network interface card is located.

The second access switch may select, based on the identifier of the network interface card, a routing path corresponding to the identifier of the network interface card from pre-received routing paths. The routing path includes a path between the aggregation switch and the first access switch. To forward the data of the network interface card by using the routing path, the data having the destination address corresponding to the network interface and that is transmitted by the second computing device may be transmitted to the aggregation switch based on a connection relationship between the second access switch and the aggregation switch in the routing path.

Then the aggregation switch may transmit, to the first access switch based on the second path, the data having the destination address corresponding to the network interface and that is transmitted by the second computing device, so that the first access switch may transmit, to the network interface card of the first computing device based on the first path, the data having the destination address corresponding to the network interface and that is transmitted by the second computing device.

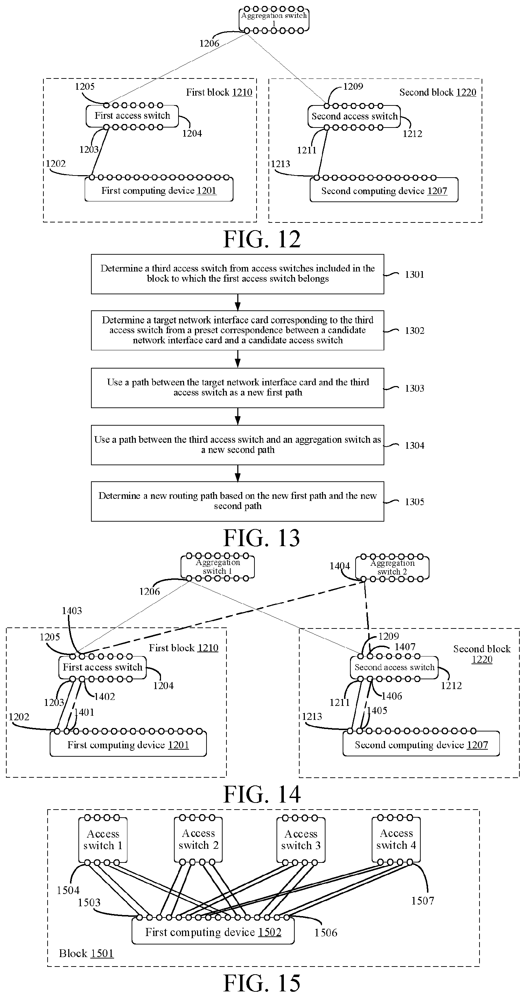

For ease of understanding of the data transmission method provided in the embodiments of the present disclosure, referring to FIG. 12, FIG. 12 is a third schematic diagram of the routing path according to an embodiment of the present disclosure. FIG. 12 shows a first block 1210 and a second block 1220. The first block 1210 includes a first computing device 1201 and a first access switch 1204. The first computing device 1201 is provided with a plurality of network interface cards. A first network interface card 1202 is shown in FIG. 12. The first access switch 1204 includes plurality of ports, which may include a first port 1203 and a second port 1205. The first port 1203 and the second port 1205 are in a one-to-one correspondence.

The first network interface card 1202 is connected to the first port 1203. A first port 1203 corresponding to the first network interface card 1202 is determined from the preset correspondence between a candidate network interface card and a candidate first port. After the first port 1203 corresponding to the first network interface card 1202 is determined, a path between the first network interface card 1202 and the first port 1203 may be used as the first path.

To be specific, the path between the first network interface card 1202 of the first computing device 1201 and the first port 1203 of the first access switch 1204 may be used as the first path. After the first port 1203 corresponding to the first network interface card 1202 is determined, a second port 1205 corresponding to the first network interface card 1202 may be determined.

The aggregation switch 1 includes a first aggregation port 1206. A first aggregation port 1206 corresponding to the second port 1205 is determined from the preset correspondence between a candidate second port and a candidate first aggregation port, and a path between the second port 1205 and the first aggregation port 1206 may be used as the second path. To be specific, the path between the second port 1205 of the first access switch 1204 and the first aggregation port 1206 of the aggregation switch 1 may be used as the second path.

In FIG. 12, the second port 1205 corresponds to the first port 1203, and both the second port 1205 and the first port 1203 belong to the first access switch 1204. Therefore, after the first path and the second path are obtained, the first path and the second path may be concatenated, to determine the routing path. In this way, the first path and the second path can be accurately determined, and then the routing path can be accurately determined.

In some embodiments, a first identifier of the first access switch 1204 is 1204, and a correspondence between 1204 and 1212 (a target identifier) is preset. Therefore, a target identifier (1212) corresponding to 1204 may be determined, and then an access switch in the second block 1220 corresponding to 1212 may be used as the second access switch 1212.

The second access switch 1212 and a second computing device 1207 both belong to the second block 1220. The second computing device 1207 is provided with a plurality of network interface cards. A second network interface card 1213 is shown in FIG. 12. The second access switch 1212 includes plurality of ports, which may include a first port 1211 and a second port 1209. The first port 1211 corresponds to the second port 1209.

A first port 1211 corresponding to the second network interface card 1213 is determined from the preset correspondence between a candidate network interface card and a candidate first port. An address of the first network interface card 1202 in the first computing device 1201 is a destination address. The second computing device 1207 may transmit, to the second access switch 1212, data that is of the first network interface card 1202 and that corresponds to the destination address.

In other words, the second network interface card 1213 may transmit, through the connection relationship between the second network interface card 1213 and the first port 1211, the data of the first network interface card 1202 to the second access switch 1212. The first port 1211 corresponds to the second port 1209.

The second access switch 1212 may transmit the data of the first network interface card 1202 to the aggregation switch 1 by using the connection relationship between the second port 1209 and the first aggregation port 1206, and then may transmit the data of the first network interface card 1202 to the first access switch 1204 by using the second path.

The first access switch 1204 may transmit the data of the first network interface card 1202 to the first network interface card 1202 by using the first path. In this way, the data that is of the first network interface card 1202 and that corresponds to the destination address transmitted by the second computing device 1207 can be forwarded to the first network interface card 1202 based on the routing path.

In the data transmission method provided in the embodiments of the present disclosure, any network interface card of the first computing device is in a one-to-one correspondence with a routing path, and the second computing device may transmit data to any network interface card of the first computing device based on the routing path. Compared with randomly determining a routing path for data transmission, utilizing a routing path corresponding to a network interface card for data transmission in the present disclosure can implement load balance for a switch that performs data transmission between the first computing device and the second computing device, thereby improving a data transmission rate. In other words, the data transmission method provided in the embodiments of the present disclosure can improve data transmission efficiency. Therefore, the foregoing technical problem 1 and technical problem 3 can be resolved.

In addition, in the data transmission method provided in the embodiments of the present disclosure, in a case that the second computing device in the second block transmits data to the first computing device in the first block, a process such as selecting a second access switch in the second block real time, selecting an aggregation switch, and then selecting an access switch in the first block is not needed, which can save computing resources, and improve a utilization rate for computing resources.

In some embodiments, for scenarios involving training artificial intelligence models, data transmission with a relatively large data amount needs to be performed between computing devices. In the data transmission method provided in the embodiments of the present disclosure, data transmission is performed by using the routing path corresponding to the network interface card, which achieves load balance for a switch that performs data transmission between the first computing device and the second computing device, and improves a data transmission rate. In other words, the data transmission method provided in the embodiments of the present disclosure can improve data transmission efficiency, thereby improving efficiency of training artificial intelligence models. Therefore, the foregoing technical problem 2 can be resolved.

In the data transmission method provided in the embodiments of the present disclosure, the routing path may be transmitted to the access switch by using a server having an SDN controller installed therein. This is equivalent to pre-planning, for a switch that needs to perform data transmission, a routing path for data transmission, thereby reducing routing path conflicts during the data transmission, improving a success rate of data transmission, and improving data transmission efficiency.

In some embodiments, after operation 102 shown in FIG. 5, first operation information of the first access switch may be obtained, and second operation information of the aggregation switch may be obtained. In some embodiments, operation information of each access switch in the access layer may be obtained.

The operation information of each access switch in the access layer may be obtained, including the first operation information. Operation information of each aggregation switch in the aggregation layer may be obtained, including second operation information, and covering aggregation switches in all aggregation sublayers. The operation information is information generated during operation of the access switch.

The first operation information is described below. The first operation information includes one or more pieces of first port information of the first access switch. The first port information is first link information between a port and a port connected to the port. In some embodiments, the first link information may include link information between the first port and the network interface card and link information between the second port and the first aggregation port. The first link information may include link status information, link bandwidth information, link delay information, and the like.

The link status information may be an operating status of a link formed between a plurality of ports. The operating status may be active, inactive, congested, or the like. The link status information may alternatively be information indicating whether a plurality of ports are connected to each other.

The link bandwidth information may be a data transmission rate of a link. The link delay information is a time required for transmission from one port of the link to another port. The link status information may be determined based on the link bandwidth information and the link delay information.

The first operation information may further include first system information of the first access switch. The first system information may include a temperature of the first access switch, an operating duration of the first access switch, a packet loss rate of the first access switch, and the like, which may be specifically set according to an actual use requirement. The system information represents temperature information of an access switch during operation, an operating duration of the access switch, a packet loss rate of the access switch, and the like.

The operation information of the access switch in the access layer is equivalent to the first operation information. The second operation information may include second port information of the aggregation switch and second system information of the aggregation switch. The second port information may include second link information between a port and a port connected to the port. The second link information may include link status information, link bandwidth information, link delay information, and the like.

The second system information may include a temperature of the aggregation switch, an operation duration of the aggregation switch, a quantity of ports of the aggregation switch, and the like. Equivalent replacement may be made to obtain a description for the first port information. Details are not described herein.

After the first operation information and the second operation information are obtained, it is determined whether the first operation information indicates that the routing path has an abnormality, and whether the second operation information indicates that the routing path has an abnormality.

In a case that at least one of the first operation information and the second operation information indicates that the routing path has an abnormality, it indicates that the operation information indicates that the routing path has an abnormality. The operation information includes at least one of the first operation information and the second operation information. In a case that at least one of the first operation information and the second operation information indicates that the routing path has no abnormality, it indicates that the operation information indicates that the routing path operates normally. Descriptions are provided below with reference to examples.

In some embodiments, for the first operation information and the second operation information, in a case that the link status information indicates that the operating status of the link is congested, it indicates that the routing path has an abnormality, that is, the routing path operates abnormally. In a case that the link status information represents that the operating status of the link is active, it indicates that the routing path has no abnormality, that is, the routing path operates normally.

In a case that the link status information indicates that a plurality of ports are not connected to each other, it indicates that a network line is damaged, that is, a line fault occurs, which may indicate that the routing path has an abnormality, that is, the routing path operates abnormally. In a case that the link status information indicates that a plurality of ports are connected and the operating status is not congested, it indicates that the network line is not damaged, that is, no line fault occurs, which may indicate that the routing path has no abnormality, that is, the routing path operates normally.

When the link bandwidth information indicates that a data transmission rate is less than a preset first transmission rate threshold, it indicates that the routing path has an abnormality, that is, the routing path operates abnormally. When the link bandwidth information indicates that the data transmission rate is greater than or equal to the preset first transmission rate threshold, it indicates that the routing path has no abnormality, that is, the routing path operates normally.

In a case that the link delay information indicates that a time required for transmission from one port of the link to another port is greater than a preset first time threshold, it indicates that the routing path has an abnormality, that is, the routing path operates abnormally. In a case that the link delay information indicates that the time required for transmission from one port of the link to another port is less than or equal to the preset first time threshold, it indicates that the routing path has no abnormality, that is, the routing path operates normally.

For the first system information, in a case that the temperature of the first access switch is greater than a preset temperature threshold, it indicates that the first access switch has an abnormality, that is, the routing path has an abnormality, that is, the routing path operates abnormally. In a case that the temperature of the first access switch is less than or equal to the preset temperature threshold, it indicates that the first access switch has no abnormality, that is, the routing path has no abnormality, that is, the routing path operates normally.

In a case that the operation duration of the first access switch is greater than a preset operation duration threshold, it indicates that the routing path has an abnormality, that is, the routing path operates abnormally. In a case that the operation duration of the first access switch is less than or equal to the preset operation duration threshold, it indicates that the routing path has no abnormality, that is, the routing path operates normally.

In a case that the packet loss rate of the first access switch is greater than a preset packet loss rate threshold, it indicates that the routing path has an abnormality, that is, the routing path operates abnormally. In a case that the packet loss rate of the first access switch is less than or equal to the preset packet loss rate threshold, it indicates that the routing path has no abnormality, that is, the routing path operates normally.

If the first operation information indicates that the routing path has no abnormality, and the second operation information indicates that the routing path has no abnormality, that is, if the first operation information indicates that the routing path operates normally, and the second operation information indicates that the routing path operates normally, the routing path may not be changed. In other words, the second access switch still forwards, to the network interface card based on the routing path, the data that is of the network interface card and that corresponds to the destination address transmitted by the second computing device.

If at least one of the first operation information and the second operation information indicates that the routing path has an abnormality, that is, if at least one of the following cases exists: the first operation information indicates that the routing path has an abnormality or the second operation information indicates that the routing path has an abnormality (that is, the operation information indicates that the routing path operates abnormally), a new routing path configured for transmitting data to a network interface card is obtained, and the new routing path is transmitted to the second access switch in the access layer.

The second access switch is further configured to: replace the routing path with the new routing path, and forward, to the network interface card based on the new routing path, the data that is of the network interface card and that corresponds to the destination address transmitted by the second computing device. The term "new routing path" in the embodiments of the present disclosure is merely configured for distinguishing it from the term "routing path", rather than reestablishing a routing path.

In some embodiments, the new routing path carrying a routing priority may be transmitted to the second access switch in the access layer. The routing priority of the new routing path is higher than a routing priority of the routing path. The second access switch may receive the new routing path having a higher routing priority than the routing path.

To be specific, the second access switch may receive two different routing paths having different routing priorities, which may be a new routing path and a routing path. In some embodiments, the second access switch is further configured to replace the routing path with the new routing path based on the routing priority of the new routing path.

For example, a routing priority of a routing path 3 may be identified by 400. A new routing path (a routing path 4) identified by 500 may be transmitted to the second access switch. The access switch may compare routing priorities of the routing path 3 and the routing path 4. Because 500 is greater than 400, the routing path 3 may be replaced with the new routing path (the routing path 4).

In some embodiments, a new routing path carrying a preset replacement identifier may be transmitted to the second access switch in the access layer. The replacement identifier may be set according to an actual use requirement of a user. For example, the replacement identifier may include a name of the routing path, a name of a switch in the routing path, a name of a network interface card in the routing path, and the like, all of which are proper.

That is, the second access switch may receive the routing path and the new routing path carrying the replacement identifier. In some embodiments, the second access switch is further configured to replace the routing path with the new routing path based on the replacement identifier.

In some embodiments, referring to FIG. 13, FIG. 13 is sixth schematic flowchart of the data transmission method according to an embodiment of the present disclosure. A manner of obtaining a new routing path configured for transmitting data to a network interface card is described below with reference to operations shown in FIG. 13.

Operation 1301: Determine a third access switch from access switches included in the block to which the first access switch belongs.

In some embodiments, the first operation information indicates that the routing path has an abnormality. The abnormality may include one or more of the following: a first type of abnormality: the first access switch is abnormal; a second abnormality: a connection between the first access switch and the network interface card is abnormal; or a third abnormality: a connection between the first access switch and the aggregation switch is abnormal.

In a case that the first operation information indicates that the routing path has an abnormality, that is, the routing path operates abnormally, a third access switch may be determined from the access switches included in the block to which the first access switch belongs. In some embodiments, for the foregoing second case and third case, the third access switch may be the first access switch.

For example, referring to FIG. 14, FIG. 14 is a fourth schematic diagram of the routing path according to an embodiment of the present disclosure. FIG. 14 continues to FIG. 12. In a case that the first operation information of the first access switch 1204 indicates that the routing path has an abnormality, at least one of the foregoing second case and third case may exist, and the first access switch 1204 may be used as the third access switch.

In some embodiments, for the foregoing first case, the third access switch is not the first access switch. For example, the block to which the first access switch belongs includes an access switch a, an access switch b, and an access switch c. The access switch a is the first access switch. For the foregoing first case, the third access switch may be the access switch b or the access switch c.

In some embodiments, the third access switch may be determined based on the operation information of the access switch. In some embodiments, an access switch with a largest data transmission rate as indicated by the link bandwidth information in the operation information may be used as the third access switch.

In some embodiments, any access switch having a data transmission rate less than a second transmission rate threshold as indicated by the link bandwidth information in the operation information may be used as the third access switch. The second transmission rate threshold is greater than the first transmission rate threshold.

In some embodiments, an access switch requiring a shortest time for transmission from one port to another port in the link as indicated by the link delay information in the operation information may be used as the third access switch. In some embodiments, an access switch requiring a time less than a preset second time threshold for transmission from one port to another port in the link as indicated by the link delay information in the operation information may be used as the third access switch. The second time threshold is less than the first time threshold. Certainly, the third access switch may alternatively be determined based on other operation information. This is not specifically limited herein.

Operation 1302: Determine a target network interface card corresponding to the third access switch from a preset correspondence between a candidate network interface card and a candidate access switch.

After the third access switch is determined, the target network interface card corresponding to the third access switch may be determined from the preset correspondence between a candidate network interface card and a candidate access switch. The preset correspondence between a candidate network interface card and a candidate access switch is described below.

For a computing device and an access switch in any block, a network interface card of the computing device may be connected to a port of the access switch by using a network line. The network interface card is in a one-to-one correspondence with the port.

For example, referring to FIG. 15, FIG. 15 is a schematic diagram of a connection relationship between a computing device and an access switch according to an embodiment of the present disclosure. A block 1501 includes a first computing device 1502 and four access switches. An access switch 1, an access switch 2, an access switch 3, and an access switch 4 are shown in FIG. 15. The first computing device 1502 is provided with 16 network interface cards. A first network interface card 1503 and a second network interface card 1506 are shown in FIG. 15.

Each of the four access switches includes four first ports, each of which may also be referred to as a downlink port. Only a first port 1504 of the access switch 1 and a first port 1507 of the access switch 4 are shown in FIG. 15. Correspondingly, each of the four access switches includes four second ports, each of which may also be referred to as an uplink port.

For each network interface card, the network interface card may be connected to 16 first ports corresponding to the four access switches. The network interface card is in a one-to-one correspondence with the first port. In FIG. 15, only the first network interface card 1503 is connected to the first port 1504 of the access switch 1 and the second network interface card 1506 is connected to the first port 1507 of the access switch 4. The description of the first network interface card 1503 is applicable to other network interface cards, and details are not described herein.

To be specific, a correspondence between a candidate network interface card and a candidate first port may be determined by using a connection relationship between a network interface card and a first port, so that the correspondence between a candidate network interface card and a candidate access switch can be obtained. Then the target network interface card corresponding to the third access switch may be determined from the correspondence between a candidate network interface card and a candidate access switch.

For example, in FIG. 15, the third access switch may be the access switch 4. Based on a correspondence between the second network interface card 1506 and the access switch 4, it can be determined that the target network interface card is the second network interface card 1506. In this way, the target network interface card can be accurately determined.

Operation 1303: Use a path between the target network interface card and the third access switch as a new first path.

In some embodiments, after the target network interface card and the third access switch are determined, the path between the target network interface card and the third access switch may be used as the new first path. The term "new first path" in the embodiments of the present disclosure is merely configured for distinguishing it from the term "first path", rather than reestablishing a first path.

The target network interface card is connected to a new first port in the third access switch. Therefore, a path between the target network interface card and the new first port may be used as the new first path. In this way, an accurate new first path can be determined. The term "new first port" in the embodiments of the present disclosure is merely configured for distinguishing it from the term "first port", rather than reestablishing a first port.

Operation 1304: Use a path between the third access switch and an aggregation switch as a new second path.

In some embodiments, a path between the second port of the third access switch and an aggregation port of the aggregation switch may be used as the new second path. The term "new second path" in the embodiments of the present disclosure is merely configured for distinguishing it from the term "second path", rather than reestablishing a second path.

If a plurality of aggregation sublayers are arranged, the path between the second port of the third access switch and the aggregation port of the aggregation switch may be used as a new first subpath, and a path between the aggregation port of the aggregation switch and an aggregation port of an aggregation switch in another aggregation sublayer may be used as a new second subpath.

Then the new second path is determined based on the new first subpath and the new second subpath. The term "new first subpath" in the embodiments of the present disclosure is merely configured for distinguishing it from the term "first subpath", rather than reestablishing a first subpath. Correspondingly, the term "new second subpath" in the embodiments of the present disclosure is merely configured for distinguishing it from the term "second subpath", rather than reestablishing a second subpath. Equivalent replacement may be made to obtain a manner of determining the routing path. Details are not described herein. In this way, an accurate new second path can be determined.

Operation 1305: Determine a new routing path based on the new first path and the new second path. Operation 1305 is equivalent to operation 1013. Reference may be made to the description for operation 1013, and equivalent replacement may be made to the description for operation 1013. Details are not described herein.

In some embodiments, the target network interface card is configured to forward, after receiving the data that is of the network interface card and that is transmitted by the second access switch based on the new routing path, the data of the network interface card to the network interface card. The data of the network interface card corresponds to the destination address transmitted by the second computing device.

In some embodiments, forwarding, by the target network interface card, the data of the network interface card to the network interface card may be implemented in any manner in the related art that can implement data transmission between plurality of network interface cards of the same computing device. For example, forwarding, by the target network interface card, the data of the network interface card to the network interface card may be implemented through remote direct memory access (RDMA). RDMA can improve a throughput of the computing device and reduce a network communication delay of the computing device. For another example, forwarding, by the target network interface card, the data of the network interface card to the network interface card may be implemented through peripheral component interconnect express (PCle).

In some embodiments, for the manner of obtaining the new routing path configured for transmitting data to a network interface card shown in FIG. 13, in some embodiments, the second access switch may receive the data that is of the network interface card and that corresponds to the destination address transmitted by the second computing device, and then transmit, to the aggregation switch based on the connection relationship between the second access switch and the aggregation switch, the data that is of the network interface card and that corresponds to the destination address transmitted by the second computing device. The aggregation switch is an aggregation switch corresponding to the new second path.

The aggregation switch may transmit the data of the network interface card to the third access switch based on the new second path, and the third access switch may transmit the data of the network interface card to the network interface card. In this way, the data that is of the network interface card and that corresponds to the destination address transmitted by the second computing device can be forwarded to the network interface card based on the new routing path.

For example, referring to FIG. 14, the second network interface card 1213 of the second computing device 1207 may first transmit, to the third network interface card 1405, the data that is of the first network interface card 1202 and that corresponds to the destination address, and then the third network interface card 1405 transmits the data of the first network interface card 1202 to the second access switch 1212 based on a connection relationship with the first port 1406 of the second access switch 1212.

The second access switch 1212 may transmit the data of the first network interface card 1202 to the aggregation switch 2 by using a connection relationship between a second port 1407 and a first aggregation port 1404 in the aggregation switch 2. In FIG. 14, the new first path is a path between a fourth network interface card 1401 of the first computing device 1201 and a first port 1402 of the first access switch 1204, and the new second path is a path between a second port 1403 of the first access switch 1204 and the first aggregation port 1404 in the aggregation switch 2.

The aggregation switch 2 may transmit the data of the first network interface card 1202 to the first access switch 1204 based on the new second path, the first access switch 1204 may transmit the data of the first network interface card 1202 to the fourth network interface card 1401 based on the new first path, and the fourth network interface card 1401 may transmit the data of the first network interface card 1202 to the first network interface card 1202. In this way, the data that is of the network interface card and that corresponds to the destination address transmitted by the second computing device can be forwarded to the network interface card based on the new routing path.

It may be learned that, in the data transmission method provided in the embodiments of the present disclosure, in a case that a routing path has an abnormality, the routing path can be replaced with a new routing path, to ensure data transmission stability, which can resolve problems such as relatively low data transmission efficiency between computing devices and reduced communication bandwidth that are caused by congestion of the routing path, thereby improving data transmission efficiency and the communication bandwidth while ensuring data transmission stability. Therefore, the foregoing technical problem 4 can be resolved.

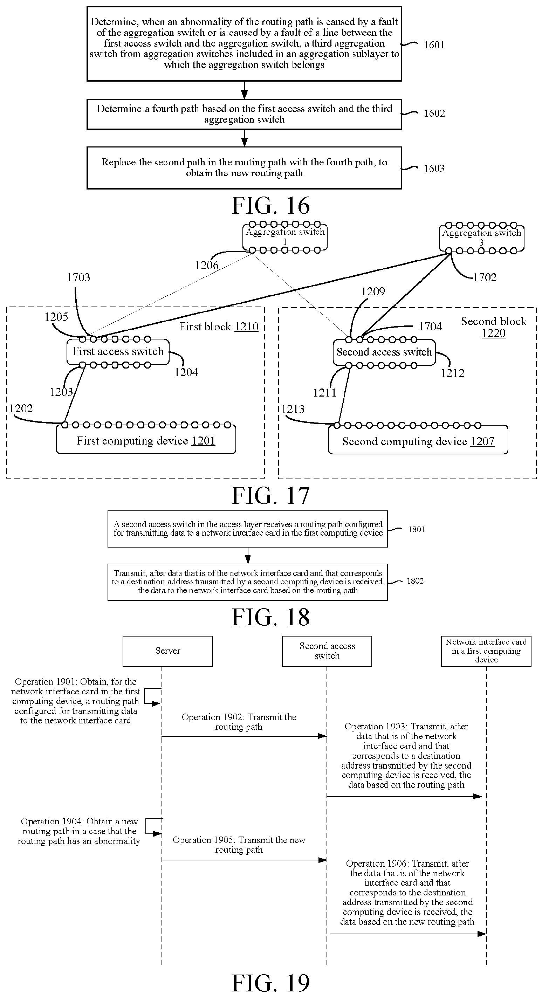

In some embodiments, referring to FIG. 16, FIG. 16 is a seventh schematic flowchart of the data transmission method according to an embodiment of the present disclosure. A manner of obtaining a new routing path configured for transmitting data to a network interface card is described below with reference to operations shown in FIG. 16.

Operation 1601: Determine, when the abnormality of the routing path is caused by a fault of the aggregation switch or is caused by a fault of a line between the first access switch and the aggregation switch, a third aggregation switch from aggregation switches included in an aggregation sublayer to which the aggregation switch belongs.

In a case in which the second operation information indicates that the routing path has an abnormality, that is, in at least one of the following cases: the abnormality of the routing path is caused by a fault of the aggregation switch, the abnormality of the routing path is caused by a fault of a line between the first access switch and the aggregation switch (the first aggregation switch), or the abnormality of the routing path is caused by a fault of a line between the first aggregation switch and the second aggregation switch, the third aggregation switch may be determined from the aggregation switches included in the aggregation sublayer to which the aggregation switch belongs.

For example, referring to FIG. 17, FIG. 17 is a fifth schematic diagram of the routing path according to an embodiment of the present disclosure. FIG. 17 continues to FIG. 12. The aggregation sublayer further includes an aggregation switch 3 that is located in the same aggregation sublayer as the aggregation switch 1. In at least one of the following cases: the abnormality of the routing path is caused by a fault of the aggregation switch 1 or the abnormality of the routing path is caused by a fault of a line between the first access switch 1204 and the aggregation switch 1, the third aggregation switch may be determined from aggregation switches included in the aggregation sublayer to which the aggregation switch 1 belongs. The third aggregation switch is the aggregation switch 3.

Operation 1602: Determine a fourth path based on the first access switch and the third aggregation switch.

In some embodiments, one aggregation sublayer is arranged, and a path between a second port of the first access switch and an aggregation port of the third aggregation switch may be determined as the fourth path. For example, referring to FIG. 17, a path between a second port 1703 of the first access switch 1204 and a first aggregation port 1702 of the aggregation switch 3 (the third aggregation switch) may be used as the fourth path.

In some embodiments, a plurality of aggregation sublayers are arranged, and a path between the first access switch and the third aggregation switch may be used as the third subpath. For details, refer to the description of determining the fourth path when one aggregation sublayer is arranged, which are not described herein.

A fourth aggregation switch corresponding to the third aggregation switch is determined based on a preset correspondence between a candidate third aggregation switch and a candidate fourth aggregation switch, the third aggregation switch and the fourth aggregation switch belonging to different aggregation sublayers.

A path between the third aggregation switch and the fourth aggregation switch is used as a fourth subpath. In some embodiments, a path between the aggregation port of the third aggregation switch and an aggregation port of the fourth aggregation switch may be used as the fourth subpath, and the fourth path is determined based on the third subpath and the fourth subpath. For a manner of determining the fourth path, refer to the description of determining the second path. Details are not described herein.

Operation 1603: Replace the second path in the routing path with the fourth path, to obtain the new routing path. In other words, the new routing path may be determined based on the first path and the fourth path. In this way, an accurate new routing path can be obtained.

In some embodiments, for the manner of obtaining the new routing path configured for transmitting data to a network interface card shown in FIG. 16, in some embodiments, the second access switch may receive the data that is of the network interface card and that corresponds to the destination address transmitted by the second computing device, and then transmit, to the aggregation switch based on the connection relationship between the second access switch and the aggregation switch, the data that is of the network interface card and that corresponds to the destination address transmitted by the second computing device. The aggregation switch is an aggregation switch corresponding to the new second path.

The aggregation switch may transmit the data of the network interface card to the first access switch based on the new second path, and the first access switch may transmit the data of the network interface card to the network interface card. In this way, the data that is of the network interface card and that corresponds to the destination address transmitted by the second computing device can be forwarded to the network interface card based on the new routing path.

For example, referring to FIG. 17, the second computing device 1207 may transmit, to the second access switch 1212, the data that is of the first network interface card 1202 and that corresponds to the destination address. The second access switch 1212 may transmit the data of the first network interface card 1202 to the aggregation switch 3 by using a connection relationship between the second port 1704 and the first aggregation port 1702 in the aggregation switch 3.

In FIG. 17, the fourth path is a path between the first aggregation port 1702 of the aggregation switch 3 and the second port 1703 of the first access switch 1204. The aggregation switch 3 may transmit the data of the first network interface card 1202 to the first access switch 1204 based on the fourth path, and the first access switch 1204 may transmit the data of the first network interface card 1202 to the first network interface card 1202 based on the first path. In this way, the data that is of the network interface card and that corresponds to the destination address transmitted by the second computing device can be forwarded to the network interface card based on the new routing path.

It may be learned that, in the data transmission method provided in the embodiments of the present disclosure, in a case that a routing path has an abnormality, the routing path can be replaced with a new routing path, to ensure data transmission stability, which can resolve problems such as relatively low data transmission efficiency between computing devices and reduced communication bandwidth that are caused by congestion of the routing path, thereby improving data transmission efficiency and the communication bandwidth while ensuring data transmission stability. Therefore, the foregoing technical problem 4 can be resolved.

In some embodiments, in the data transmission method provided in the embodiments of the present disclosure, the operation of "obtaining first operation information of the first access switch, and obtaining second operation information of the aggregation switch" may be periodically performed, that is, the first operation information and the second operation information may be periodically obtained, to determine whether the operation information changes from indicating that the routing path has an abnormality to indicating that the routing path has no abnormality, that is, to determine whether the operation information changes from indicating that the routing path operates abnormally to indicating that the routing path operates normally. The operation information is correspondingly at least one of the first operation information and the second operation information.

If the operation information does not change from indicating that the routing path operates abnormally to indicating that the routing path operates normally, that is, the operation information still indicates that the routing path operates abnormally, the second access switch may forward, to the network interface card based on the new routing path, the data that is of the network interface card and that corresponds to the destination address transmitted by the second computing device.

If the operation information changes from indicating that the routing path operates abnormally to indicating that the routing path operates normally, a new routing path deletion instruction is transmitted to the second access switch in the access layer, so that the second access switch deletes the new routing path. In this way, after the routing path turns to be normal, the new routing path can be deleted, to ensure load balance of a switch that performs data transmission between the first computing device and the second computing device, and improve a data transmission rate. in other words, the data transmission method provided in the embodiments of the present disclosure can improve data transmission efficiency.

A second data transmission method provided in the embodiments of the present disclosure is described below. As described above, the second electronic device configured to implement the data transmission method provided in the embodiments of the present disclosure may be a switch, and in some embodiments, may be an access switch of an access layer.

Referring to FIG. 18, FIG. 18 is an eighth schematic flowchart of the data transmission method according to an embodiment of the present disclosure. The data transmission method provided in the embodiments of the present disclosure is described below with reference to operations shown in FIG. 18. An execution body of the data transmission method is a second access switch.

The data transmission method provided in the embodiments of the present disclosure is applied to a multilayer network architecture. The multilayer network architecture includes an access layer and an aggregation layer. The aggregation layer includes at least one aggregation sublayer. The access layer includes a plurality of access switches. Each access switch is connected to at least one first computing device. Each first computing device is provided with at least one network interface card. The aggregation sublayer includes a plurality of aggregation switches. For details, refer to the description for the first data transmission method, which are not described herein.

Operation 1801: A second access switch in the access layer receives a routing path configured for transmitting data to a network interface card in the first computing device.

A one-to-one correspondence exists between a routing path and a network interface card. The routing path includes a first path between the network interface card and a first access switch in the access layer, and a second path between the first access switch and an aggregation switch in the at least one aggregation sublayer. The second access switch is connected to the at least one second computing device, and the second access switch and the first access switch belong to different blocks.

Operation 1802: Transmit, after data that is of the network interface card and that corresponds to a destination address transmitted by a second computing device is received, the data to the network interface card based on the routing path.

For operation 1801 and operation 1802, refer to the description for the first data transmission method, and details are not described herein. In some embodiments, the second access switch is further configured to receive a new routing path, and transmit, after receiving the data that is of the network interface card and that corresponds to the destination address transmitted by the second computing device, the data to the network interface card based on the new routing path.

In the data transmission method provided in the embodiments of the present disclosure, any network interface card of the first computing device is in a one-to-one correspondence with a routing path, and the second computing device may transmit data to any network interface card of the first computing device based on the routing path. Compared with randomly determining a routing path for data transmission, utilizing a routing path corresponding to a network interface card for data transmission in the present disclosure can implement load balance for a switch that performs data transmission between the first computing device and the second computing device, and improve a data transmission rate. In other words, the data transmission method provided in the embodiments of the present disclosure can improve data transmission efficiency.

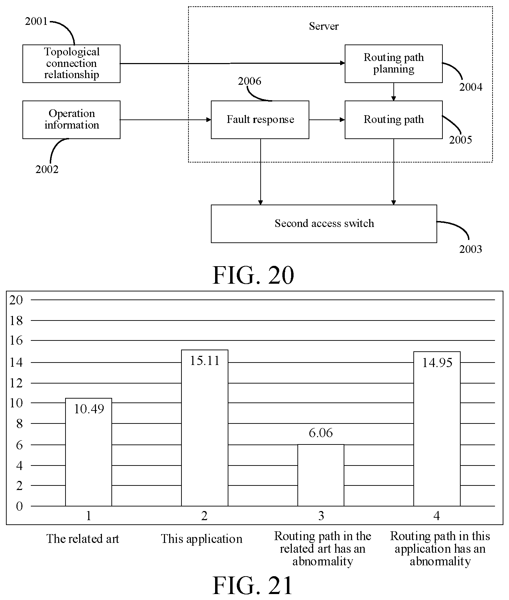

In some embodiments, the data transmission method provided in the embodiments of the present disclosure is described below by using an example with reference to FIG. 19 to FIG. 20. FIG. 19 is a ninth schematic flowchart of the data transmission method according to an embodiment of the present disclosure. FIG. 20 is a tenth schematic flowchart of the data transmission method according to an embodiment of the present disclosure.

In FIG. 19 to FIG. 20, an example in which a first electronic device configured to perform the data transmission method provided in the embodiments of the present disclosure is a server is used, and an example in which a second electronic device configured to perform the data transmission method provided in the embodiments of the present disclosure is a second access switch is used. The first electronic device includes an SDN controller. That is, the server shown in FIG. 19 to FIG. 20 may include the SDN controller.

Refer to FIG. 19. Operation 1901: Obtain, for a network interface card in the first computing device, a routing path configured for transmitting data to the network interface card.

For operation 1901, refer to the description for operation 101 shown in FIG. 5, and details are not described herein. In operation 1901, routing path planning 2004 is performed by using a topological connection relationship 2001 shown in FIG. 20. A manner of performing routing path planning 2004 by using the topological connection relationship 2001 is described below.

Based on a topological connection relationship between the first computing device and the first access switch, a first port of the first access switch to which any network interface card arranged in the first computing device is connected may be determined. For example, the first port of the first access switch (GPULA-001) is Eth200GE1. That is, a downlink port of the first access switch (GPULA-001) is Eth200GE1.

The first port of the first access switch has a corresponding second port, and the first port and the second port are in a one-to-one correspondence. Therefore, after the first port connected to the network interface card is determined, a second port corresponding to the first port connected to the network interface card may be determined, the second port being an uplink interface.

For example, a downlink port of the first access switch (GPULA-001) is Eth200GE1, and an uplink port of the first access switch (GPULA-001) is Eth200GE17, that is, a second port of an access switch (GPULA-001) is Eth200GE17.

Then an aggregation switch connected to the first access switch may be determined by using a topological connection relationship between the first access switch and the aggregation switch. That is, an aggregation switch connected to the uplink port of the first access switch is determined, so that a routing path 2005 can be obtained. The routing path 2005 includes a first path between the network interface card and the first access switch and a second path between the first access switch and the aggregation switch.

Operation 1902: Transmit the routing path.

Operation 1902 is to transmit the routing path to the second access switch. In FIG. 20, after the routing path 2005 is obtained, the routing path 2005 may be transmitted to a second access switch 2003. For operation 1902, refer to the description for operation 101 shown in FIG. 5, and details are not described herein.

Operation 1903: Transmit, after data that is of the network interface card and that corresponds to a destination address transmitted by the second computing device is received, the data based on the routing path. Operation 1903 is to transmit, after the data that is of the network interface card and that corresponds to the destination address transmitted by the second computing device is received, the data to the network interface card of the first computing device based on the routing path.

Operation 1901 to operation 1903 are described below with reference to an example. The routing path configured for transmitting data to a network interface card is obtained. The routing path includes the first path between the network interface card and the first access switch. A prefix 1.1.1.1/32 may be set for the first path. 1.1.1.1/32 is configured for indicating the first path between the network interface card and the first access switch.

The routing path further includes a second path between the first access switch and the aggregation switch. A prefix 2.2.2.2 may be set for the second path. 2.2.2.2 is configured for indicating the second path between the first access switch and the aggregation switch. The paths with the prefix of 1.1.1.1/32 and the prefix of 2.2.2.2 may be transmitted to the first access switch, and a routing priority of the routing path is identified by 400. After receiving the data that is of the network interface card and that corresponds to the destination address transmitted by the second computing device, the first access switch may transmit the data to the network interface card of the first computing device based on the routing path.

Operation 1904: Obtain a new routing path in a case that the routing path has an abnormality.

For operation 1904, refer to the descriptions corresponding to FIG. 13 and FIG. 16, and details are not described herein. In FIG. 20, it is determined based on operation information 2002 whether the routing path has an abnormality. In a case that the operation information 2002 indicates that the routing path has an abnormality, a fault response 2006 may be performed. The operation information 2002 includes one or more of first operation information or second operation information.

Operation 1905: Transmit the new routing path.

In FIG. 20, the fault response 2006 is to obtain a new routing path and transmit the new routing path to the second access switch 2003. The routing path 2005 may be the new routing path. In a case that the operation information changes from indicating that the routing path has an abnormality to indicating that the routing path has no abnormality, the fault response 2006 may be to transmit a new routing path deletion instruction to the second access switch 2003.

Operation 1906: Transmit, after the data that is of the network interface card and that corresponds to the destination address transmitted by the second computing device is received, the data based on the new routing path.

Operation 1906 is to transmit, after the data that is of the network interface card and that corresponds to the destination address transmitted by the second computing device is received, the data to the network interface card of the first computing device based on the new routing path.

In the data transmission method provided in the embodiments of the present disclosure, any network interface card of the first computing device is in a one-to-one correspondence with a routing path, and the second computing device may transmit data to any network interface card of the first computing device based on the routing path. Compared with randomly determining a routing path for data transmission, utilizing a routing path corresponding to a network interface card for data transmission in the present disclosure can implement load balance for a switch that performs data transmission between the first computing device and the second computing device, and improve a data transmission rate. In other words, the data transmission method provided in the embodiments of the present disclosure can improve data transmission efficiency.

Referring to FIG. 21, FIG. 21 is a schematic diagram of a transmission rate test result according to an embodiment of the present disclosure. A unit of a vertical coordinate in FIG. 21 is GB/s, a column corresponding to a label 1 is a data transmission rate 1 in the related art 1, which is 10.49 GB/s, a column corresponding to a label 2 is a data transmission rate 2 in the present disclosure, which is 15.11 GB/s. It may be learned that, the data transmission rate in the data transmission method provided in the embodiments of the present disclosure is higher.

A column corresponding to a label 3 is a data transmission rate 3 in the related art when the routing path has an abnormality, which is 6.06 GB/s, and a column corresponding to a label 4 is a data transmission rate 4 in the present disclosure when the routing path has an abnormality, which is 14.95 GB/s. It may be learned that, although the abnormality in the routing path reduces the data transmission rate, the data transmission rate in the data transmission method provided in the embodiments of the present disclosure is still higher than the data transmission rate in the related art.

An exemplary structure in which a data transmission apparatus 455 provided in the embodiments of the present disclosure is implemented as a software module is further described below. The data transmission apparatus 455 provided in the embodiments of the present disclosure is applied to a multilayer network architecture. The multilayer network architecture includes an access layer and an aggregation layer. The aggregation layer includes at least one aggregation sublayer. The access layer includes a plurality of access switches. Each access switch is connected to at least one first computing device, and each first computing device is provided with at least one network interface card. The aggregation sublayer includes a plurality of aggregation switches.

In some embodiments, as shown in FIG. 2A, software modules in the data transmission apparatus 455 stored in the memory 450 may include:
an obtaining module 4551, configured to obtain, for any network interface card in the first computing device, a routing path configured for transmitting data to the network interface card, the routing path including the access layer and the aggregation layer; and
a first transmission module 4552, configured to transmit the routing path to a second access switch in the access layer, the second access switch being connected to at least one second computing device; and the second access switch being configured to forward, to the network interface card based on the routing path, data that is of the network interface card and that corresponds to a destination address transmitted by the second computing device.

In some embodiments, a first access switch has at least one first port, and has a second port in a one-to-one correspondence with the first port. the obtaining module 4551 is further configured to: determine, from a preset correspondence between a candidate network interface card and a candidate first port, a first port corresponding to the network interface card, and use a path between the network interface card and the first port corresponding to the network interface card as a first path; determine, from a preset correspondence between a candidate second port and a candidate aggregation switch, an aggregation switch corresponding to the second port, and determine a second path based on the second port and the aggregation switch corresponding to the second port; and determine the routing path based on the first path and the second path.

In some embodiments, the aggregation layer includes a plurality of aggregation sublayers, and the aggregation switch corresponding to the second port includes a first aggregation switch and a second aggregation switch, the first aggregation switch and the second aggregation switch belonging to different aggregation sublayers, and the first access switch being connected to the second aggregation switch.

The obtaining module 4551 is further configured to: use a routing path between the second port and the second aggregation switch as a first subpath; use a routing path between the second aggregation switch and the first aggregation switch as a second subpath; and determine the second path based on the first subpath and the second subpath.

In some embodiments, the obtaining module 4551 is further configured to: determine target ports in the first path and the second path; and concatenate the first path and the second path based on the target ports, and determine a concatenated path as the routing path.

In some embodiments, the multilayer network architecture further includes a core layer, the core layer including a plurality of core switches. The obtaining module 4551 is further configured to: obtain a first path between the network interface card and a first access switch in the access layer, and obtain a second path between the first access switch and an aggregation switch in the at least one aggregation sublayer; determine, from a preset correspondence between a candidate aggregation switch and a candidate core switch, a target core switch corresponding to the aggregation switch in the second path; use a path between the aggregation switch in the second path and the target core switch as a third path; and determine the routing path based on the first path, the second path, and the third path.

In some embodiments, the core layer includes a plurality of core sublayers, and the target core switch includes a first core switch and a second core switch, the first core switch and the second core switch belonging to different core sublayers.

The obtaining module 4551 is further configured to: use a path between the aggregation switch in the second path and the first core switch as a fifth subpath; use a path between the first core switch and the second core switch as a sixth subpath; and determine the third path based on the fifth subpath and the sixth subpath.

In some embodiments, the first access switch belongs to a first block. The first transmission module 4552 is further configured to: search, based on a first identifier of the first access switch, identifiers of access switches belonging to a second block for a second identifier matching the first identifier, the first block being different from the second block; and use an access switch indicated by the second identifier as the second access switch, and transmit the routing path to the second access switch.

In some embodiments, the first identifier is a first digit, a plurality of access switches belong to the second block, and identifiers of the access switches belong to the second block are second digits. The first transmission module 4552 is further configured to: determine, for each second digit, a difference between the first digit and the second digit; and use the second digit as the second identifier matching the first identifier if a quotient of the difference by a preset third digit is a target value.

In some embodiments, the first transmission module 4552 is further configured to: determine, based on the first identifier of the first access switch, a target identifier corresponding to the first identifier from a preset correspondence between a candidate first identifier and a candidate target identifier; and search the identifiers of the access switches belonging to the second block for an identifier consistent with the target identifier as the second identifier matching the first identifier.

In some embodiments, the obtaining module 4551 is further configured to: obtain first operation information of the first access switch and obtain second operation information of the aggregation switch after the routing path is transmitted to the second access switch in the access layer; and obtain a new routing path configured for transmitting data to the network interface card and transmit the new routing path to the second access switch in the access layer if at least one of the first operation information and the second operation information indicates that the routing path has an abnormality, the second access switch being further configured to: replace the routing path with the new routing path, and forward, to the network interface card based on the new routing path, the data that is of the network interface card and that corresponds to the destination address transmitted by the second computing device.

In some embodiments, the obtaining module 4551 is further configured to transmit the new routing path carrying a routing priority to the second access switch in the access layer, the routing priority of the new routing path being higher than a routing priority of the routing path; and the second access switch being further configured to replace the routing path with the new routing path based on the routing priority of the new routing path.

In some embodiments, the obtaining module 4551 is further configured to: determine a third access switch from access switches included in the block to which the first access switch belongs; determine a target network interface card corresponding to the third access switch from a preset correspondence between a candidate network interface card and a candidate access switch; use a path between the target network interface card and the third access switch as a new first path; use a path between the third access switch and the aggregation switch as a new second path; and determine the new routing path based on the new first path and the new second path, the target network interface card being configured to forward, after receiving the data of the network interface card transmitted by the second access switch based on the new routing path, the data of the network interface card to the network interface card.

In some embodiments, the obtaining module 4551 is further configured to: determine, when the abnormality of the routing path is caused by a fault of the aggregation switch or is caused by a fault of a line between the first access switch and the aggregation switch, a third aggregation switch from aggregation switches included in an aggregation sublayer to which the aggregation switch belongs; determine a fourth path based on the first access switch and the third aggregation switch; and replace the second path in the routing path with the fourth path, to obtain the new routing path.

In some embodiments, a plurality of aggregation sublayers are arranged. The obtaining module 4551 is further configured to: use a path between the first access switch and the third aggregation switch as a third subpath; determine, based on a preset correspondence between a candidate third aggregation switch and a candidate fourth aggregation switch, a fourth aggregation switch corresponding to the third aggregation switch, the third aggregation switch and the fourth aggregation switch belonging to different aggregation sublayers; use a path between the third aggregation switch and the fourth aggregation switch as a fourth subpath; and determine the fourth path based on the third subpath and the fourth subpath.

In some embodiments, the first transmission module 4552 is further configured to: transmit, after transmitting the new routing path to the second access switch in the access layer, a new routing path deletion instruction to the second access switch in the access layer if the operation information changes from indicating that the routing path operates abnormally to indicating that routing path operates normally, the second access switch being configured to delete the new routing path.

An exemplary structure in which a data transmission apparatus 456 provided in the embodiments of the present disclosure is implemented as a software module is further described below. The data transmission apparatus 456 provided in the embodiments of the present disclosure is applied to a multilayer network architecture. The multilayer network architecture includes an access layer and an aggregation layer. The aggregation layer includes at least one aggregation sublayer. The access layer includes a plurality of access switches. Each access switch is connected to at least one first computing device, and each first computing device is provided with at least one network interface card. The aggregation sublayer includes a plurality of aggregation switches.

In some embodiments, as shown in FIG. 2B, software modules in the data transmission apparatus 455 stored in the memory 450 may include:
a receiving module 4561, configured to receive a routing path configured for transmitting data to a network interface card in the first computing device,
the routing path including the access layer and the aggregation layer, and the routing path including a first path between the network interface card and a first access switch in the access layer, and a second path between the first access switch and an aggregation switch in the at least one aggregation sublayer, and the second access switch being connected to at least one second computing device; and
a second transmission module 4562, configured to transmit, after receiving data that is of the network interface card and that corresponds to a destination address transmitted by the second computing device, the data to the network interface card based on the routing path.

An embodiment of the present disclosure provides a computer program product, the computer program product including a computer program or a computer-executable instruction, the computer program or the computer-executable instruction being stored in a computer-readable storage medium. A processor of an electronic device (a first electronic device and a second electronic device) reads the computer-executable instruction or the computer program from the computer-readable storage medium, and executes the computer-executable instruction or the computer program, to enable the electronic device to perform the data transmission method in the embodiments of the present disclosure.

An embodiment of the present disclosure provides a computer-readable storage medium, having a computer-executable instruction or a computer program stored therein, the computer-executable instruction or the computer program, when executed by a processor, causing the processor to perform the data transmission method provided in the embodiments of the present disclosure, for example, the data transmission method shown in FIG. 5, or for another example, the data transmission method shown in FIG. 18.

In some embodiments, the computer-readable storage medium may be a memory such as a RAM, a ROM, a flash memory, a magnetic surface memory, a compact disc, or a compact disc read-only memory (CD-ROM). The computer-readable storage medium may alternatively be various devices including one of or any combination of the foregoing memories.

In some embodiments, the computer-executable instruction may be written in a form of a program, software, a software module, a script, or code according to a programming language (including a compiler or interpreter language or a declarative or procedural language) in any form, and may be deployed in any form, including an independent program or a module, a component, a subroutine, or another unit suitable for use in a computing environment.

In an example, the computer-executable instruction or the computer program may but may not necessarily correspond to a file in a file system, may be stored in a part of the file for storing other programs or data, for example, stored in one or more scripts in a hypertext markup language (HTML) document, stored in a single file dedicated for the discussed program, or stored in a plurality of collaborative files (for example, files having one or more modules, a subprogram, or a code part stored therein).

For example, the computer-executable instruction or the computer program may be deployed to be executed on an electronic device (a first electronic device or a second electronic device), or on a plurality of electronic devices located at one location, or on a plurality of electronic devices distributed at a plurality of locations and connected through a communication network.

In conclusion, in the data transmission method provided in the embodiments of the present disclosure, any network interface card of the first computing device is in a one-to-one correspondence with a routing path, and the second computing device may transmit data to any network interface card of the first computing device based on the routing path. Compared with randomly determining a routing path for data transmission, utilizing a routing path corresponding to a network interface card for data transmission in the present disclosure can implement load balance for a switch that performs data transmission between the first computing device and the second computing device, thereby improving a data transmission rate. In other words, the data transmission method provided in the embodiments of the present disclosure can improve data transmission efficiency. Therefore, the foregoing technical problem 1 and technical problem 3 can be resolved.

In some embodiments, for scenarios involving training artificial intelligence models, data transmission with a relatively large data amount needs to be performed between computing devices. In the data transmission method provided in the embodiments of the present disclosure, data transmission is performed by using the routing path corresponding to the network interface card, which achieves load balance for a switch that performs data transmission between the first computing device and the second computing device, and improves a data transmission rate. In other words, the data transmission method provided in the embodiments of the present disclosure can improve data transmission efficiency, thereby improving efficiency of training artificial intelligence models. Therefore, the foregoing technical problem 2 can be resolved.

In the data transmission method provided in the embodiments of the present disclosure, in a case that a routing path has an abnormality, the routing path can be replaced with a new routing path, to ensure data transmission stability, which can resolve problems such as relatively low data transmission efficiency between computing devices and reduced communication bandwidth that are caused by congestion of the routing path, thereby improving data transmission efficiency and the communication bandwidth while ensuring data transmission stability. Therefore, the foregoing technical problem 4 can be resolved.

The foregoing descriptions are merely embodiments of the present disclosure, and are not intended to limit the protection scope of the present disclosure. Any modification, equivalent replacement, or improvement made within the spirit and principle of the present disclosure falls within the protection scope of the present disclosure.

## Claims

1. A method for data transmission, applied to a multilayer network architecture, the multilayer network architecture comprising an access layer and an aggregation layer, the access layer comprising a plurality of access switches, each of the plurality of access switches being connected to at least one first computing device, each first computing device being provided with at least one network interface card, and the method comprising:
obtaining, for a network interface card in the first computing device, a routing path configured to transmit data to the network interface card, the routing path passing through the access layer and the aggregation layer; and
transmitting the routing path to a second access switch in the access layer, the second access switch being connected to at least one second computing device; and
the second access switch being configured to forward, to the network interface card using the routing path, data with a destination address corresponding to the network interface card and transmitted by the second computing device.

2. The method according to claim 1, wherein a first access switch has at least one first port and at least one second port, each of the at least one first port has a one-to-one correspondence with one of the at least one second port; and
wherein obtaining the routing path configured to transmit data to the network interface card comprises:
determining, from a preset correspondence between a candidate network interface card and a candidate first port, a first port corresponding to the network interface card, and using a path between the network interface card and the first port corresponding to the network interface card as a first path;
determining, from a preset correspondence between a candidate second port and a candidate aggregation switch, an aggregation switch corresponding to the second port, and determining a second path based on the second port and the aggregation switch corresponding to the second port; and
determining the routing path based on the first path and the second path.

3. The method according to claim 2, wherein the aggregation layer comprises a plurality of aggregation sublayers; the aggregation switch corresponding to the second port comprises a first aggregation switch and a second aggregation switch, the first aggregation switch and the second aggregation switch belonging to different aggregation sublayers, and the first access switch being connected to the second aggregation switch; and
wherein determining the second path based on the second port and the aggregation switch corresponding to the second port comprises:
using a routing path between the second port and the second aggregation switch as a first subpath;
using a routing path between the second aggregation switch and the first aggregation switch as a second subpath; and
determining the second path based on the first subpath and the second subpath.

4. The method according to claim 2 or 3, wherein determining the routing path based on the first path and the second path comprises:
determining target ports in the first path and the second path; and
concatenating the first path and the second path based on the target ports, and determining a concatenated path as the routing path.

5. The method according to claim 1, wherein the multilayer network architecture further comprises a core layer, the core layer comprising a plurality of core switches; and
wherein obtaining the routing path configured to transmit data to the network interface card comprises:
obtaining a first path between the network interface card and a first access switch in the access layer, and obtaining a second path between the first access switch and an aggregation switch in the aggregation layer;
determining, from a preset correspondence between a candidate aggregation switch and a candidate core switch, a target core switch corresponding to the aggregation switch in the second path;
using a path between the aggregation switch in the second path and the target core switch as a third path; and
determining the routing path based on the first path, the second path, and the third path.

6. The method according to claim 5, wherein the core layer comprises a plurality of core sublayers, and the target core switch comprises a first core switch and a second core switch, the first core switch and the second core switch belonging to different core sublayers; and
wherein using the path between the aggregation switch in the second path and the target core switch as the third path comprises:
using a path between the aggregation switch in the second path and the first core switch as a fifth subpath;
using a path between the first core switch and the second core switch as a sixth subpath; and
determining the third path based on the fifth subpath and the sixth subpath.

7. The method according to any one of claims 1 to 6, wherein the first access switch belongs to a first block; and
wherein transmitting the routing path to the second access switch in the access layer comprises:
searching, based on a first identifier of the first access switch, identifiers of access switches belonging to a second block for a second identifier matching the first identifier, the first block being different from the second block; and
using an access switch indicated by the second identifier as the second access switch, and transmitting the routing path to the second access switch.

8. The method according to claim 7, wherein the first identifier is a first digit, a plurality of access switches belong to the second block, and identifiers of the access switches belong to the second block are second digits; and
wherein searching, based on the first identifier of the first access switch, the identifiers of access switches belonging to the second block for the second identifier matching the first identifier comprises:
determining, for each second digit, a difference between the first digit and the second digit; and
using the second digit as the second identifier matching the first identifier if a quotient of the difference by a preset third digit is a target value.

9. The method according to claim 8, wherein the searching, based on the first identifier of the first access switch, the identifiers of access switches belonging to the second block for the second identifier matching the first identifier comprises:
determining, based on the first identifier of the first access switch, a target identifier corresponding to the first identifier from a preset correspondence between a candidate first identifier and a candidate target identifier; and
searching the identifiers of the access switches belonging to the second block for an identifier consistent with the target identifier as the second identifier matching the first identifier.

10. The method according to any one of claims 1 to 9, wherein after transmitting the routing path to the second access switch in the access layer, the method further comprises:
obtaining first operation information of the first access switch, and obtaining second operation information of the aggregation switch; and
obtaining a new routing path configured to transmit data to the network interface card and transmitting the new routing path to the second access switch in the access layer if at least one of the first operation information and the second operation information indicates that the routing path has an abnormality,
the second access switch being further configured to: replace the routing path with the new routing path, and forward, to the network interface card using the new routing path, the data with a destination address corresponding to the network interface card and transmitted by the second computing device.

11. The method according to claim 10, wherein transmitting the new routing path to the second access switch in the access layer comprises:
transmitting the new routing path carrying a routing priority to the second access switch in the access layer,
the routing priority of the new routing path being higher than a routing priority of the routing path; and
the second access switch being further configured to replace the routing path with the new routing path based on the routing priority of the new routing path.

12. The method according to claim 10 or 11, wherein obtaining the new routing path configured to transmit data to the network interface card comprises:
determining a third access switch from access switches comprised in the block to which the first access switch belongs;
determining a target network interface card corresponding to the third access switch from a preset correspondence between a candidate network interface card and a candidate access switch;
using a path between the target network interface card and the third access switch as a new first path;
using a path between the third access switch and the aggregation switch as a new second path; and
determining the new routing path based on the new first path and the new second path,
the target network interface card being configured to forward, after receiving the data of the network interface card transmitted by the second access switch based on the new routing path, the data of the network interface card to the network interface card.

13. The method according to claim 10 or 11, wherein obtaining the new routing path configured to transmit data to the network interface card comprises:
determining, when the abnormality of the routing path is caused by a fault of the aggregation switch or is caused by a fault of a line between the first access switch and the aggregation switch, a third aggregation switch from aggregation switches comprised in an aggregation sublayer to which the aggregation switch belongs;
determining a fourth path based on the first access switch and the third aggregation switch; and
replacing the second path in the routing path with the fourth path, to obtain the new routing path.

14. The method according to claim 13, wherein a plurality of aggregation sublayers are arranged; and
wherein determining the fourth path based on the first access switch and the third aggregation switch comprises:
using a path between the first access switch and the third aggregation switch as a third subpath;
determining, based on a preset correspondence between a candidate third aggregation switch and a candidate fourth aggregation switch, a fourth aggregation switch corresponding to the third aggregation switch, the third aggregation switch and the fourth aggregation switch belonging to different aggregation sublayers;
using a path between the third aggregation switch and the fourth aggregation switch as a fourth subpath; and
determining the fourth path based on the third subpath and the fourth subpath.

15. The method according to any one of claims 10 to 14, wherein after transmitting the new routing path to the second access switch in the access layer, the method further comprises:
transmitting a new routing path deletion instruction to the second access switch in the access layer if the operation information changes from indicating that the routing path operates abnormally to indicating that routing path operates normally, the second access switch being configured to delete the new routing path.

16. A method for data transmission, applied to a multilayer network architecture, the multilayer network architecture comprising an access layer and an aggregation layer, the access layer comprising a plurality of access switches, each of the plurality of the access switches being connected to at least one first computing device, each first computing device being provided with at least one network interface card, and the method comprising:
receiving, by a second access switch in the access layer, a routing path configured to transmit data to a network interface card in the first computing device, the routing path passing through the access layer and the aggregation layer, and the second access switch being connected to at least one second computing device; and
transmitting, after data with a destination address corresponding to the network interface card and transmitted by the second computing device is received, the data to the network interface card using the routing path.

17. An apparatus for data transmission, applied to a multilayer network architecture, the multilayer network architecture comprising an access layer and an aggregation layer, the access layer comprising a plurality of access switches, each of the plurality of access switches being connected to at least one first computing device, each first computing device being provided with at least one network interface card, and the apparatus comprising:
an obtaining module, configured to obtain, for a network interface card in the first computing device, a routing path configured to transmit data to the network interface card, the routing path passing through the access layer and the aggregation layer; and
a first transmission module, configured to transmit the routing path to a second access switch in the access layer, the second access switch being connected to at least one second computing device; and
the second access switch being configured to forward, to the network interface card using the routing path, data with a destination address corresponding to the network interface card and transmitted by the second computing device.

18. The apparatus according to claim 17, wherein a first access switch has at least one first port and at least one second port, each of the at least one first port has a one-to-one correspondence with one of the at least one second port; and
wherein the obtaining module is further configured to: determine, from a preset correspondence between a candidate network interface card and a candidate first port, a first port corresponding to the network interface card, and use a path between the network interface card and the first port corresponding to the network interface card as a first path; determine, from a preset correspondence between a candidate second port and a candidate aggregation switch, an aggregation switch corresponding to the second port, and determine a second path based on the second port and the aggregation switch corresponding to the second port; and determine the routing path based on the first path and the second path.

19. The apparatus according to claim 17, wherein the multilayer network architecture further comprises a core layer, the core layer comprising a plurality of core switches; and
the obtaining module is further configured to: obtain a first path between the network interface card and a first access switch in the access layer, and obtain a second path between the first access switch and an aggregation switch in the aggregation layer; determine, from a preset correspondence between a candidate aggregation switch and a candidate core switch, a target core switch corresponding to the aggregation switch in the second path; use a path between the aggregation switch in the second path and the target core switch as a third path; and determine the routing path based on the first path, the second path, and the third path.

20. The apparatus according to any one of claims 17 to 19, wherein the first access switch belongs to a first block; and
the first transmission module is further configured to: search, based on a first identifier of the first access switch, identifiers of access switches belonging to a second block for a second identifier matching the first identifier, the first block being different from the second block; and use an access switch indicated by the second identifier as the second access switch, and transmit the routing path to the second access switch.

21. The apparatus according to any one of claims 17 to 20, wherein the obtaining module is further configured to: obtain first operation information of the first access switch and obtain second operation information of the aggregation switch after the routing path is transmitted to the second access switch in the access layer; and obtain a new routing path configured for transmitting data to the network interface card and transmit the new routing path to the second access switch in the access layer if at least one of the first operation information and the second operation information indicates that the routing path has an abnormality, the second access switch being further configured to: replace the routing path with the new routing path, and forward, to the network interface card based on the new routing path, the data with the destination address corresponding to the network interface card and transmitted by the second computing device.

22. An apparatus for data transmission, applied to a multilayer network architecture, the multilayer network architecture comprising an access layer and an aggregation layer, the access layer comprising a plurality of access switches, each of the plurality of access switches being connected to at least one first computing device, each first computing device being provided with at least one network interface card, and the apparatus comprising:
a receiving module, configured to receive a routing path configured to transmit data to a network interface card in the first computing device,
the routing path passing through the access layer and the aggregation layer, and the second access switch being connected to at least one second computing device; and
a second transmission module, configured to transmit, after receiving data with a destination address corresponding to the network interface card and transmitted by the second computing device, the data to the network interface card based on the routing path.

23. An electronic device, comprising:
a memory, configured to store computer-executable instructions or a computer program; and
a processor, configured to implement the method for data transmission according to any one of claims 1 to 16 when executing the computer-executable instructions or the computer program stored in the memory.

24. A computer-readable storage medium, having computer-executable instructions or a computer program stored therein, the computer-executable instructions or the computer program, when executed by a processor, implementing the method for data transmission according to any one of claims 1 to 16.

25. A computer program product, comprising computer-executable instructions or a computer program, the computer-executable instructions or the computer program, when executed by a processor, implementing the method for data transmission according to any one of claims 1 to 16.
